# EUROPÄISCHE PATENTANMELDUNG

(11) **EP 4 721 997 A1**
(43) Veröffentlichungstag der Anmeldung: **08.04.2026**
(21) Anmeldenummer: 25205574.4
(22) Anmeldetag: 30.09.2025
(51) Int. Cl.: B60C 9/00, B60C 9/06, B60C 9/08, B60C 9/22, B60C 15/04, B60C 9/02

(54) **FAHRZEUGLUFTREIFEN**

(30) Priorität: 02.10.2024 DE 102024209696
(71) Anmelder: Continental Reifen Deutschland GmbH, 30175 Hannover (DE)
(72) Erfinder: Römer, Justus, 30175 Hannover (DE); Reese, Wolfgang, 30175 Hannover (DE); Wies, Burkhard, 30175 Hannover (DE); Günzler, Fabian, 30175 Hannover (DE); Wenckel, Mathias, 30175 Hannover (DE)
(74) Vertreter: Continental Corporation

(57) **Zusammenfassung**

Die Erfindung betrifft einen Fahrzeugluftreifen, umfassend einen Laufstreifen, eine Karkasse (2) und eine Spulbandage mit einen Spulbandagen-Festigkeitsträger, wobei die Karkasse (2) eine Karkasslage aufweist, wobei jede Karkasslage zwischen Wulstbereichen des Fahrzeugluftreifens verläuft und wobei jede Karkasslage aus zwei in Umfangsrichtung (U) benachbarten Karkass-Streifen (2S) zusammengesetzt ist, wobei jeder Karkass-Streifen (2S) einen Karkass-Festigkeitsträger (2b) aufweist und Randbereiche (2c) von benachbarten Karkass-Streifen (2S) innerhalb eines Überlappungsbereiches (2e) zusammengefügt sind.

Erfindungsgemäß ist vorgesehen, dass
- in der Karkasslage jeweils ausschließlich Karkass-Festigkeitsträger (2b) aus einem metallischen Material verlaufen,
- in einem der Randbereiche (2c) in Umfangsrichtung (U) benachbarte Karkass-Festigkeitsträger (2b) einen Festigkeitsträger-Abstand (A2b) zueinander aufweisen, der mindestens einem Karkass-Festigkeitsträger-Durchmesser (D2b) der Karkass-Festigkeitsträger (2b) entspricht; und
- der Fahrzeugluftreifen einen Traglastindex im Bereich von 71 bis 126 aufweist.

## Beschreibung

Die Erfindung betrifft einen Fahrzeugluftreifen für Personenkraftwagen und/oder leichte Nutzfahrzeuge gemäß dem Oberbegriff des Anspruches 1.

Aufgrund der Vielzahl weltweit eingesetzter Fahrzeugreifen ist die über die Zeit anfallende Menge von Altreifen ein wachsendes ökologisches Problem. Ein Verbrennen oder gar Vergraben bzw. Verklappen stellen berechtigterweise keine nachhaltigen Entsorgungsmethoden dar, zudem Altreifen selbst inzwischen als eine wertvolle Ressourcenquelle betrachtet werden.

Ein Recycling von Altreifen ist keineswegs unbekannt, kann aber nur mit hohem Aufwand betrieben werden und erzielt bisher kaum oder sogar keine vollständige Verwertung. Ein sehr bekanntes Verfahren ist die thermische Zersetzung, auch Pyrolyse genannt, um beispielsweise Pyrolyseruße und Pyrolyseöle zurückzugewinnen, die selbst wieder im Reifenherstellungsprozess eingesetzt werden. Eine weitestgehende Kreislaufwirtschaft ist aber auch in diesen Verfahren üblicherweise nicht gegeben.

Ein typischer Reifenaufbau stellt eine solche wünschenswerte Kreislaufwirtschaft vor drastische Herausforderungen. So ist beispielsweise bekannt, dass Geräuschabsorber, Klebstoffe für Geräuschabsorber sowie Dichtmittel ein großes Problem aufgrund ihrer verbliebenen Klebrigkeit bei fast jedem Trennverfahren darstellen. Doch selbst Altreifen, die keine solchen Geräuschabsorber, Klebstoffe und/oder Dichtmittel aufweisen oder davon bereits befreit wurden, stellen eine große Herausforderung für ein effizientes Trenn- bzw. Recyclingverfahren dar.

Beispielsweise enthält ein Altreifen, insbesondere für Personenkraftwagen und leichte Nutzfahrzeuge, neben Stahlcorden als Gürtel-Festigkeitsträger und in der Wulst, Karkass-Festigkeitsträger in der Karkasse und Gürtel-Festigkeitsträger in der Spulbandage, sofern eine Spulbandage verbaut ist, aus einem textilen Material. Üblicherweise sind alle Festigkeitsträger in einer umhüllenden Kautschukmischung (oft auch als Gummierungsmischung bezeichnet) eingebettet; häufig unter Zuhilfenahme von Haftvermittlern. Dies bewirkt, dass oft eine solide Verbindung zwischen Festigkeitsträger einerseits und Gummierungsmischung andererseits über die gesamte Lebensdauer eines Reifens erhalten bleibt. Üblicherweise ist der Verbund zwischen textilen Festigkeitsträgern und der umhüllenden Kautschukmischung signifikant stärker als zwischen Stahlcorden und ihrer Kautschukmischung. Dies hat zur Folge, dass ein nachträgliches Abtrennen textiler Festigkeitsträger von der umhüllenden Kautschukmischung nur sehr schwer (wenn überhaupt) möglich ist. Im Gegensatz dazu lassen sich Stahlcorde, d.h. Festigkeitsträger aus einem metallischen Material, sehr viel einfacher von einer Kautschukmischung trennen.

Zudem sind Fahrzeugluftreifen mit Spulbandagen enthaltend textile Festigkeitsträger in ihrer Lebensdauer eingeschränkt, da eine Runderneuerung typischerweise nicht infrage kommt. Ein Abtrennen des abgefahrenen Laufstreifens und ein anschließendes Aufbringen eines neuen Laufstreifens scheitert häufig daran, dass beim mechanischen Abtrennen des abgefahrenen Laufstreifens die Spulbandage bzw. deren textile Festigkeitsträger Schaden nehmen. Dies macht den Reifen für eine Runderneuerung meist unbrauchbar, zumindest jedoch ungeeignet.

Ferner erfolgt bei der konventionellen Fertigung von beispielsweise Radialreifen für Personenkraftwagen oder leichte Nutzfahrzeuge die Konturierung des Gürtels und der Spulbandage, sofern eine Spulbandage verbaut ist, im Allgemeinen erst während der Vulkanisation des Reifens durch die Einformung des auf zylindrischen Aufbautrommeln aufgebauten Reifenrohlings mittels eines im Inneren des in die Reifenheizform eingebrachten Reifenrohlings aufgeblähten Balges. Nachteilig dabei ist, dass es während der Vulkanisierung zu Materialverschiebungen und zu einer in axialer Richtung ungleichmäßigen Ausdehnung kommen kann. Um dem zu begegnen, ist in DE 10 2004 058 522 A1 vorgesehen, eine konturierte Bautrommel zu verwenden. Bei dem darin beschriebenen Verfahren wird dabei ein Stahlgürtel verwendet, wobei durch die konturierte Bautrommel in axialer Richtung eine gleichmäßige Dehnung und ein verzerrungsfreies Ausformen erreicht werden kann. Weiterhin wird ermöglicht, die Spulbandage "endkonturnah" aufzubringen und damit auf einfache Weise die erwünschte Bandagenspannung sicherzustellen, wobei dazu eine Spulbandage mit hoch-dehnbaren Nylonfäden als Spulbandagen-Festigkeitsträger verwendet wird. Nachteilig dabei ist, dass es durch die hoch-dehnbaren Nylonfäden je nach Konstruktion des Fahrzeugluftreifens zu einer unerwünschten radialen Ausdehnung des radial darunterliegenden Materials kommen kann.

In WO 2023/090022 A1 sind ferner Karkass-Festigkeitsträger aus einem organischen Material in Radialbauweise, Spulbandagen-Festigkeitsträger aus einem hoch-dehnbaren organischen Material mit einer Bruchdehnung von >10% sowie innerhalb von zwei Gürtellagen Gürtel-Festigkeitsträger aus Stahl vorgesehen. Die Spulbandage deckt dabei die Gürtelkanten des Gürtels ab.

In JP 2023 544389 A ist eine einzelne Karkasslage mit textilen Karkass-Festigkeitsträgern, ein Gürtel mit zwei Gürtellagen mit jeweils Gürtel-Festigkeitsträgern aus Stahl beschrieben, auf denen radial außen eine Spulbandage aufgespult ist, die aus Spulbandagen-Festigkeitsträgern aus einem organischen Material aufgebaut ist, die in einem Winkel von weniger als 10° zur Umfangsrichtung verlaufen. Die Spulbandage deckt dabei die Gürtelkanten des Gürtels ab.

In KR 102352893 B1 ist ferner beschrieben, dass radial oberhalb zweier Karkasslagen zwei Gürtellagen mit Gürtel-Festigkeitsträgern aus Stahl liegen, deren Winkel zur Umfangsrichtung sich über die Längsausdehnung der Gürtel-Festigkeitsträger verändern, wobei im Reifenzenit ein größerer Winkel zur Umfangsrichtung vorliegt als in den Schulterbereichen. Ferner liegen die Gürtel-Festigkeitsträger unterschiedlicher Gürtellagen derartig übereinander, dass sich diese in einem Kreuzverband mit entgegengesetzten Winkeln kreuzen. Radial oberhalb der Gürtellagen grenzt unmittelbar der Laufstreifen an.

In KR 20050094681 A ist beschrieben, auf einem Gürtel eine Spulbandage aufzuspulen, die aus Spulbandagen-Festigkeitsträgern aus einem Cord aus Mikrofaser-Stahl besteht, der eine Zugfestigkeit von zwischen 25kgf und 29kgf aufweist.

In EP 1900549 A1 ist ferner beschrieben, dass zwischen dem Laufstreifen und einer Gürtellage eine Spulbandage aus gekrümmten Spulbandagen-Festigkeitsträgern bzw. Spulbandagen-Festigkeitsträgern mit einer Wellenform angeordnet sind, die jeweils aus Stahl gefertigt sind und eine Zugfestigkeit von zwischen 2000 MPa und 5000 MPa aufweist. Dadurch soll in der Spulbandage das Umfangswachstum während der Vulkanisierung ausgeglichen werden. Für die Karkasse und den Gürtel ist jeweils kein metallisches Material vorgesehen. Ferner deckt die Spulbandage die Gürtelkanten der Gürtellagen ab.

In US 11179970 B2 ist ein Gürtel mit Gürtel-Festigkeitsträgern aus Stahl, die im Kreuzverband angeordnet sind, vorgesehen, wobei der Winkel der Gürtel-Festigkeitsträger in Längsrichtung der Gürtel-Festigkeitsträger variiert und dabei maximal 35° zur Umfangsrichtung beträgt. Eine Spulbandage bedeckt den Gürtel, wobei die Spulbandagen-Festigkeitsträger aus einem hoch-dehnbaren organischen Material gefertigt sind. Die Spulbandage deckt dabei die Gürtelkanten des radial darunterliegenden Gürtels nicht ab.

In JP 6798273 B2 ist eine Karkasse mit Karkass-Festigkeitsträgern aus einem organischen Material mit einem Winkel von zwischen 75° und 90° zur Umfangsrichtung beschrieben. Radial darüberliegend ist ein Gürtel mit hoch-dehnfesten Gürtel-Festigkeitsträgern, insbesondere aus Stahl, vorgesehen, die sich kreuzen und deren Winkel über die Längsausdehnung variiert, wobei im Reifenzenit geringere Winkel vorliegen als in den Reifenschultern. Eine Spulbandage ist nicht vorgesehen.

In KR 101467464 B1 ist ein Gürtel beschrieben, der Gürtellagen aufweist, deren Gürtel-Festigkeitsträger im Kreuzverband ausgeführt sind und dabei einem Winkel von weniger als 25° zur Umfangsrichtung aufweisen. Eine Spulbandage ist nicht vorgesehen.

In US 5365988 A ist ein Gürtel mit Gürtel-Festigkeitsträgern aus Stahl beschrieben, wobei eine radial darüberliegende Spulbandage mit nicht-metallischen Spulbandagen-Festigkeitsträgern die Gürtelkanten des Gürtels bedeckt. Die Gürtel-Festigkeitsträger verlaufen im Kreuzverband. Radial darunterliegend ist eine Karkasse mit Karkass-Festigkeitsträgern aus einem gummierten Gewebe angeordnet.

In JP 6538520 B2 ist ein Gürtel aus Gürtel-Festigkeitsträgern aus einem metallischen Material vorgesehen, wobei die Spulbandage die Gürtelkanten bedeckt. Die Spulbandage besteht aus organischen Spulbandagen-Festigkeitsträgern, die in einem Winkel von zwischen 0° und 5° zur Umfangsrichtung verlaufen. Die Karkasse weist Karkass-Festigkeitsträger aus einem organischen Material auf.

In CN 211663006 U ist eine Spulbandage beschrieben, die die Gürtelkanten des radial darunterliegenden Gürtels abdeckt. Im Schulterbereich verlaufen zusätzliche Spulbandagen-Streifen und im Reifenzenit können benachbarte Spulbandagen-Streifen mit einer Lücke gewickelt sein.

In US 2019160874 A1 ist eine Spulbandage aus organischen Spulbandagen-Festigkeitsträgern beschrieben, wobei die Spulbandage auch über Gürtelkanten des Gürtels ragt.

JP 2010095057 A beschreibt einen Gürtel, der nicht durch die randseitig verlaufende Spulbandage abgedeckt wird, wobei die Gürtel-Festigkeitsträger wellig in Umfangsrichtung gespult sind. Die Spulbandage aus metallischen oder organischen Festigkeitsträgern ist nur an den Seiten und neben dem Gürtel platziert, wobei die Spulbandagen-Festigkeitsträger ein geringeres Elastizitätsmodul als die in Umfangsrichtung verlaufenden Gürtel-Festigkeitsträger aufweisen.

In EP 1094956 B1 ist ein Notlaufreifen beschreiben, der eine nicht-metallische in Umfangsrichtung verlaufende Verstärkungslage zwischen der Karkasse und dem Gürtel oder alternativ auch über dem Gürtel aufweist. Die Festigkeitsträger der Verstärkungslage werden spiralförmig auf dem Umfang der Karkasse oder des Gürtels aufgewickelt.

DE 4208705 A1 beschreibt einen Gürtel aus Stahl, deren Gürtelkanten durch einen textilverstärkten Streifen bedeckt sind.

KR 100976580 B1 beschreibt einen Fahrzeugluftreifen für schwere Fahrzeuge, beispielsweise einen Truck oder einen Bus, mit einem wellig gespulten Gürtel-Festigkeitsträger. Bei einem derartigen Reifen ist keine Spulbandage vorgesehen.

In GB 770673 A, CN 114056007 A und WO 2018/125181 A1 ist jeweils eine Karkasse vorgesehen, die als Winkelkarkasse ausgeführt ist, d.h. die Karkass-Festigkeitsträger verlaufen in einem Winkel von zwischen 70° und 90°zur Umfangsrichtung.

In US 5058649 A, KR 100187594 B1, US 5524688 A und WO 2019105620 A1 ist jeweils vorgesehen, dass sich radial oberhalb der Wulstkerne im Wulstbereich zwischen diesen und den Karkasslagen mit Karkass-Festigkeitsträgern aus einem nicht-metallischen Material kein Apex befindet.

Der folgenden Erfindung liegt die Aufgabe zugrunde, einen Fahrzeugluftreifen anzugeben, der eine hohe Belastbarkeit aufweist, stabil und widerstandsfähig ausgeführt ist und eine erhöhte Lebensdauer aufweist.

Diese Aufgabe wird durch einen Fahrzeugluftreifen gemäß dem unabhängigen Anspruch gelöst. Die Unteransprüche geben bevorzugte Weiterbildungen an.

Demnach ist ein Fahrzeugluftreifen für Personenkraftwagen und/oder leichte Nutzfahrzeuge, umfassend einen Laufstreifen, eine Karkasse und eine Spulbandage aus einer oder mehr als einer Spulbandagenlage mit einer axialen Spulbandagen-Ausdehnung, wobei
- die Spulbandage in radialer Richtung oberhalb der Karkasse, d.h. direkt die Karkasse teilweise bedeckend oder mit zusätzlichen Materiallagen dazwischen, und in radialer Richtung unterhalb des Laufstreifens, d.h. direkt von dem Laufstreifen bedeckt oder mit zusätzlichen Materiallagen dazwischen, angeordnet ist und die Spulbandage mindestens einen Spulbandagen-Festigkeitsträger aufweist,
- die Karkasse mindestens eine Karkasslage aufweist, wobei jede Karkasslage zwischen Wulstbereichen des Fahrzeugluftreifens verläuft und wobei jede Karkasslage aus mindestens zwei in Umfangsrichtung benachbarten Karkass-Streifen zusammengesetzt ist, wobei jeder Karkass-Streifen mindestens einen Karkass-Festigkeitsträger aufweist und Randbereiche von in Umfangsrichtung benachbarten Karkass-Streifen derselben Karkasslage innerhalb eines Überlappungsbereiches, vorzugsweise überlappend, beispielsweise durch Überlappungssplicen, zusammengefügt sind, wobei
- in der mindestens einen Karkasslage innerhalb der jeweiligen Karkass-Streifen jeweils ausschließlich Karkass-Festigkeitsträger aus einem metallischen Material verlaufen,
- in zumindest einem der Randbereiche des jeweiligen Karkass-Streifens, vorzugsweise in beiden Randebereichen, in Umfangsrichtung benachbarte Karkass-Festigkeitsträger des jeweiligen Karkass-Streifens einen Festigkeitsträger-Abstand zueinander aufweisen, der mindestens einem Karkass-Festigkeitsträger-Durchmesser der Karkass-Festigkeitsträger entspricht; und
- der Fahrzeugluftreifen einen Traglastindex im Bereich von 71 bis 126 aufweist.

Demnach ist also die rundumlaufende Karkasse in Umfangsrichtung in mindestens zwei, vorzugsweise mehr als zwei, Karkass-Streifen unterteilt, die während der Präparation der Karkasse in ihren Randbereichen übereinandergelegt werden, um daraus die Karkasse zu bilden. Jeder Karkass-Streifen wird dabei vorher entsprechend so zugeschnitten, dass die darin eingebetteten Karkass-Festigkeitsträger in der zusammengesetzten und aufgespulten Karkasse unter einem bestimmten (dritten) Winkel zur Umfangsrichtung verlaufen. Der Karkasse ist dabei im fertigen Fahrzeugluftreifen auch weiterhin anzusehen, dass diese aus mehreren Karkass-Streifen zusammengesetzt ist, da sich die unterschiedlichen, dem jeweiligen Karkass-Streifen zugeordneten Karkass-Festigkeitsträger im Überlappungsbereich in radialer Richtung zumindest geringfügig versetzt zueinander liegen und/oder sich die Karkass-Festigkeitsträger, die dem jeweiligen Karkass-Streifen zugeordnet sind, nicht über eine den jeweiligen Karkass-Streifen begrenzende Randkante hinaus erstrecken. Insofern lassen sich die einzelnen Karkass-Streifen auch im vulkanisierten Zustand des Fahrzeugluftreifens noch identifizieren.

Vorteilhafterweise wird bei der Erfindung zumindest in dem Überlappungsbereich zwischen den Karkass-Festigkeitsträgern des jeweiligen Karkass-Streifens in dessen Randbereichen ein Abstand belassen. Dadurch kann beim sog. Überlappsplicen erreicht werden, dass bei vorteilhafter erhöhter Haftung im Überlappungsbereich (durch das überlappende Aneinanderfügen) dennoch nicht die doppelte Anzahl an Karkass-Festigkeitsträgern vorhanden sind, da diese aufgrund des Einhaltens des Festigkeitsträger-Abstandes in den Randbereichen "ausgedünnt" sind. Dadurch ergeben sich insbesondere bei der Verwendung von metallischen Karkass-Festigkeitsträgern, insbesondere aus Stahl, geringere Rückstellmomente insbesondere infolge der geringeren Biegefestigkeit. Dies kann speziell im Karkasshochschlag zu einer Verringerung der Rückstellmomente führen, so dass ein Öffnen des Karkasshochschlages vermieden werden kann, was zu einer höheren Lebensdauer des Fahrzeugluftreifens führt. Zudem kann durch das Ausdünnen Gewicht gespart werden.

Das Ausdünnen kann beispielsweise dadurch erreicht werden, dass bereits beim Kalandrieren jeder zweite Karkass-Festigkeitsträger weggelassen wird. Im Überlappungsbereich "fehlt" dann jeder zweite Karkass-Festigkeitsträger in dem jeweiligen Karkass-Streifen, wodurch Modul und Biegesteifigkeit weitestgehend auf dem Niveau außerhalb des Überlappungsbereiches sind und die genannten Nachteile verbessert oder sogar vermieden werden können. Dazu wird auch TU verbessert.

Dem Fachmann ist dabei klar, ob ein bestimmtes Element in der jeweiligen Lage als Festigkeitsträger angesehen wird oder nicht. Im Sinne der vorliegenden Erfindung sind beispielsweise Fäden bzw. Filamente, die typischerweise zur klassischen Verteilung und/oder Ableitung elektrischer Spannungen dienen, keine Festigkeitsträger im Sinne der vorliegenden Erfindung. Dies gilt gleichermaßen für übliche Fäden bzw. Filamente zur Luftabführung sowie andere Hilfsmittel. Dies gilt besonders bevorzugt immer dann, wenn solche Hilfsmittel nicht explizit mit einer als Festigkeitsträger bezeichneten Funktion benannt sind.

Zudem bedeutet das Merkmal "aus einem metallischen Material" im Kontext der vorliegenden Erfindung, dass ein entsprechender metallischer Festigkeitsträger im Wesentlichen aus dem jeweiligen metallischen Material, beispielsweise aus Stahl, besteht. Zudem bedeutet das Merkmal "aus Stahl", dass ein geringer Anteil eines typischerweise nicht als Stahl bezeichneten Metalls/Metalllegierung nicht ausgeschlossen ist. Beispielsweise ist ein mit einer Messingbeschichtung versehener Stahl von diesem Merkmal umfasst. Vorzugsweise umfasst ein metallischer Festigkeitsträger aus Stahl 90 Gewichtsprozent Stahl oder mehr, bezogen auf die Gesamtmasse des metallischen Festigkeitsträgers, vorzugsweise 92 Gewichtsprozent oder mehr, besonders bevorzugt 95 Gewichtsprozent oder mehr, ganz besonders bevorzugt 97 Gewichtsprozent oder mehr, am bevorzugtesten 99 Gewichtsprozent oder mehr.

Ferner ist die Karkasse bevorzugt frei von bzw. weist sie keine beispielsweise textilen Festigkeitsträger auf bzw. ist der mindestens eine metallische Karkass-Festigkeitsträger der einzige Festigkeitsträger in der Karkasse, wodurch sich die Recyclingfähigkeit des Fahrzeugluftreifens verbessert und ein verringerter Aufwand für eine Runderneuerung gewährleistet werden können. Der Einsatz metallischer Karkass-Festigkeitsträger senkt nämlich die Anfälligkeit von Beschädigungen beim Entfernen eines beispielsweise abgefahrenen Laufstreifens. Dies ermöglicht eine Runderneuerung des Fahrzeugluftreifens durch ein Aufbringen eines neuen Laufstreifens, so dass die insgesamte Lebensdauer eines entsprechenden Fahrzeugluftreifens deutlich erhöht werden kann. Dies kann als bedeutender Start einer zumindest ansatzweisen Kreislaufwirtschaft betrachtet werden.

Während der Lebensdauer weist ein solcher Fahrzeugluftreifen mit metallischen Karkass-Festigkeitsträgern aber weitere signifikante Vorteile auf. So ist die Stabilität, Steifigkeit und Widerstandsfähigkeit eines Fahrzeugluftreifens mit metallischen Festigkeitsträgern insbesondere in der Karkasse typischerweise erhöht. Zudem weist ein entsprechend ausgerüsteter Fahrzeugluftreifen eine höhere Belastungsgrenze auf, beispielsweise in Form eines höheren Traglastindexes (auch Tragfähigkeitsindex oder Tragfähigkeitskennzahl genannt), verglichen mit Fahrzeugluftreifen gleicher Bauform und Größe aber mit textilen Karkass-Festigkeitsträgern. Dies wäre mit Blick auf schwerer werdende Elektrofahrzeuge zukünftig von Vorteil, da die Reifendimensionen nicht zwingend vergrößert werden müssten.

Im Kontext der vorliegenden Erfindung bedeutet der Begriff "leichte Nutzfahrzeuge" Fahrzeuge, die typischerweise als Transporter bezeichnet werden (engl. "van size"). Typischerweise werden Fahrzeugluftreifen durch ihre Dimensionen, einen Traglastindex (entspricht einer Traglast in kg pro Reifen) und einen Geschwindigkeitsindex einer Fahrzeugklasse zugeordnet. Der Traglastindex des erfindungsgemäßen Fahrzeugluftreifens liegt generell im Bereich von 71 bis 126 und deckt dabei sowohl Personenkraftwagen als auch solche leichten Nutzfahrzeuge ab. Dies entspricht typischerweise einer Traglast von 345 kg bis 1700 kg. Der erfindungsgemäße Fahrzeugluftreifen ist daher entweder ein Personenkraftwagenfahrzeugluftreifen oder ein Leicht-Nutzfahrzeugluftreifen. Im Kontext der vorliegenden Erfindung ist der Traglastindex auf einen Reifendruck von 2,5 bar für Einfachbereifung referenziert.

Speziell bevorzugt ist ein Fahrzeugluftreifen mit einem Traglastindex im Bereich von 74 (375 kg) bis 114 (1180 kg), vorzugsweise von 77 (412 kg) bis 109 (1030 kg), weiter bevorzugt von 80 (450 kg) bis 107 (975 kg), am bevorzugtesten von 83 (487 kg) bis 104 (900 kg). Dies trifft vorzugsweise auf Fahrzeugluftreifen für Personenkraftwagen zu. Ebenfalls speziell bevorzugt ist ein Fahrzeugluftreifen mit einem Traglastindex im Bereich von 105 (925 kg) bis 126 (1700 kg), vorzugsweise von 110 (1060 kg) bis 124 (1600 kg), weiter bevorzugt von 115 (1215 kg) bis 122 (1500 kg), am bevorzugtesten von 116 (1250 kg) bis 120 (1400 kg). Dies trifft vorzugsweise auf Fahrzeugluftreifen für leichte Nutzfahrzeuge zu.

Vorzugsweise umfasst der erfindungsgemäße Fahrzeugluftreifen Reifen der Kategorie C1 und/oder C2 gemäß der Klassifizierung von Reifen basierend auf der Verordnung (EG) Nr. 661/2009 des europäischen Parlaments und des Rates vom 13. Juli 2009. Dementsprechend ist der erfindungsgemäße Fahrzeugluftreifen vorzugsweise kein Reifen der Kategorie C3. Der erfindungsgemäße Fahrzeugluftreifen ist auch kein Fahrradreifen und kein Motorradreifen, vorzugsweise kein Zweiradreifen, und kein Truckreifen und kein Schwerlastreifen. Vorzugsweise ist weiterhin vorgesehen, dass der Festigkeitsträger-Abstand in dem zumindest einen Randbereich des jeweiligen Karkass-Streifens zwischen dem 1-fachen und dem 2-fachen, vorzugsweise zwischen dem 1-fachen und dem 1,5-fachen, des Karkass-Festigkeitsträger-Durchmessers der Karkass-Festigkeitsträger beträgt. Es wird also ausreichend Platz gelassen, so dass sich in dem Überlappungsbereich insgesamt eine Anzahl an Karkass-Festigkeitsträgern befinden, die der Anzahl an Karkass-Festigkeitsträgern neben dem Überlappungsbereich innerhalb derselben Fläche in etwa entspricht, so dass es insbesondere zu der beschriebenen geringeren Biegefestigkeit über die gesamte Karkasse kommt.

Vorzugsweise ist weiterhin vorgesehen, dass sich die Randbereiche des jeweiligen Karkass-Streifens über eine Randlänge von zwischen 3mm und 10mm, vorzugsweise von 5mm, ausgehend von einer Randkante in den jeweiligen Karkass-Streifen erstrecken und/oder der Festigkeitsträger-Abstand zwischen den in Umfangsrichtung benachbarten Karkass-Festigkeitsträgern ausschließlich in den Randbereichen des jeweiligen Karkass-Streifens ausgebildet ist, und außerhalb der Randbereiche kein solch vergrößerter Festigkeitsträger-Abstand mehr gelassen wird, so dass sich über die gesamte Karkasslage eine in etwa gleichmäßige Biegesteifigkeit aufgrund derselben Anzahl an Karkass-Festigkeitsträgern pro Fläche ergibt. Mit den angegebenen Randlängen lässt sich beim Überlappsplicen zudem eine gute Haftung zwischen den aneinandergefügten Karkass-Streifen erreichen.

Vorzugsweise ist weiterhin vorgesehen, dass die Randbereiche in Umfangsrichtung benachbarter Karkass-Streifen derselben Karkasslage derartig zusammengefügt sind, vorzugsweise überlappend zusammengefügt sind, dass in dem Überlappungsbereich angeordnete Karkass-Festigkeitsträger, die unterschiedlichen Karkass-Streifen aber derselben Karkasslage zugeordnet sind, auch in Umfangsrichtung versetzt zueinander liegen, insbesondere derartig, dass Karkass-Festigkeitsträger des einen Karkass-Streifens innerhalb des Überlappungsbereiches radial oberhalb oder radial unterhalb eines Zwischenraums zwischen zwei Karkass-Festigkeitsträgern des jeweils anderen Karkass-Streifens liegen. Die durch die Wahl des Festigkeitsträger-Abstands ausgebildeten Zwischenräume in den Randbereichen eines Karkass-Streifens werden also radial darüberliegend durch die ebenfalls mit derselben Teilung beabstandeten Karkass-Festigkeitsträger "gefüllt". Die Karkass-Festigkeitsträger verlaufen also im Überlappungsbereich parallel zueinander. In der Fläche sind die Karkass-Festigkeitsträger dann im Überlappungsbereich gleichmäßig verteilt angeordnet, vorzugsweise mit einer identischen Festigkeitsträger-Dichte wie außerhalb des Überlappungsbereiches.

Vorzugsweise ist weiterhin vorgesehen, dass die Karkass-Festigkeitsträger in den mindestens zwei Karkass-Streifen der mindestens einen Karkasslage unter einem dritten Winkel zur Umfangsrichtung verlaufen, wobei
- die Karkasse mindestens zwei Karkasslagen aufweist, wobei jede Karkasslage in den mindestens zwei Karkass-Streifen jeweils mindestens einen Karkass-Festigkeitsträger aus einem metallischen Material aufweist, wobei der jeweilige Karkass-Festigkeitsträger unter einem dritten Winkel von zwischen 40° und 50°, vorzugsweise 45°, zur Umfangsrichtung verläuft, und die Karkass-Festigkeitsträger radial übereinanderliegender Karkasslagen entgegengesetzte Steigungsrichtungen aufweisen, so dass sich in radialer Richtung übereinanderliegende Karkass-Festigkeitsträger unterschiedlicher Karkasslagen kreuzen zum Ausbilden eines Kreuzverbandes, oder
- die Karkasse lediglich eine Karkasslage aufweist, wobei die Karkasslage in den mindestens zwei Karkass-Streifen mindestens einen Karkass-Festigkeitsträger aus einem metallischen Material aufweist, wobei der Karkass-Festigkeitsträger unter einem dritten Winkel von größer als 70° und kleiner gleich 90° zur Umfangsrichtung verläuft.

Es kann also eine Karkasse in Diagonalbauweise (Kreuzverband) oder in Radialbauweise aus den einzelnen Karkass-Streifen zusammengesetzt werden, je nachdem, wie die einzelnen Karkass-Streifen geschnitten werden. Sind die metallischen Karkass-Festigkeitsträger in dem Fahrzeugluftreifen für Personenkraftwagen und/oder leichte Nutzfahrzeuge dabei nicht in Umfangsrichtung ausgerichtet, können vorteilhafterweise der Rollwiderstand sowie der Wirkungsgrad verbessert und dadurch insgesamt eine Effizienzsteigerung bei sinkendem Kraftstoffverbrauch erreicht werden. Im Falle eines angetriebenen Rades herrscht nämlich am betreffenden Rad ein Antriebs- bzw. Bremsmoment. Diese Momente werden durch die Seitenwände des Fahrzeugluftreifens über die jeweiligen Bauteile des lagenartig aufgebauten Fahrzeugluftreifens zur Felge übertragen. Ein Teil dieser Momente werden durch Zugkräfte auf die Karkass-Festigkeitsträger in der Karkasse übertragen. Da die Karkass-Festigkeitsträger aus einem metallischen Material, insbesondere Stahl, gefertigt sind und unter dem genannten Winkel zur Umfangsrichtung verlaufen, können die Antriebs- bzw. Bremsmomente in Form von Zugkräften zuverlässig über die Festigkeitsträger aufgenommen werden. Durch die Beabstandung der einzelnen Karkass-Festigkeitsträger in den Randbereichen kann dies weiter optimiert werden.

Durch die Wahl des dritten Winkels sowie dem metallischen Material der Karkass-Festigkeitsträger kann dabei vermieden werden, dass benachbarte Karkass-Festigkeitsträger bei wirkenden Momenten auf Schub belastet und dadurch warm werden, wie beispielsweise bei Karkass-Festigkeitsträgern aus einem organischen oder einem textilen Material. Eine Dissipation von Energie und dadurch ein Steigen der Verlustleistung kann daher vermieden oder zumindest minimiert werden, wodurch der Wirkungsgrad des Fahrzeugluftreifens steigt. Dabei hat der Fahrzeugluftreifen je nach Ausrichtung der Karkass-Festigkeitsträger beim Antreiben bzw. beim Bremsen einen höheren Wirkungsgrad, was zu einer vergrößerten Reichweite insbesondere bei Elektrofahrzeugen führt. Beim Bremsen kann dann nämlich ein größerer Teil der Bremsenergie durch Rekuperation in die Batterie zurückgeführt werden, weil weniger Energie im Fahrzeugluftreifen dissipiert wird.

Vorzugsweise ist weiterhin vorgesehen, dass der mindestens eine Spulbandagen-Festigkeitsträger eine Bruchdehnung von zwischen 2% und 6%, vorzugsweise von zwischen 3% und 5,5%, besonders bevorzugt von zwischen 3% und 5%, aufweist.

Mit einer derartigen Spulbandage mit einer hohen Dehnungssteifigkeit bzw. einer hohen Dehnungsfestigkeit kann vorteilhafterweise eine radiale Ausdehnung des radial darunterliegenden Materials, insbesondere der Karkasslage(n), bzw. ein Umfangswachstum des Fahrzeugluftreifens effektiv unterdrückt werden. Dies ist insbesondere dann von Vorteil, wenn eine verringerte Längssteifigkeit bzw. eine verringerte Dehnungsfestigkeit der radial darunterliegenden Lagen, beispielsweise bei einer Ausführung der Karkasse als Winkelkarkasse oder als Diagonalkarkasse oder bei einem Gürtel (falls vorhanden) mit einem Kreuzverband, zu kompensieren ist. Vorteilhafterweise kann durch das Unterdrücken des Umfangswachstums auch die Kompression auf die Karkasse mit den metallischen Festigkeitsträgern sowie auch auf den Gürtel (falls vorhanden) in einem Fahrzeugluftreifen speziell für Personenkraftwagen und/oder leichte Nutzfahrzeuge gezielt reduziert werden.

Ferner kann durch die hoch-dehnfesten Spulbandagen-Festigkeitsträger und die metallischen Festigkeitsträger in der Karkasslage ein Fahrzeugluftreifen speziell für Personenkraftwagen und/oder leichte Nutzfahrzeuge bereitgestellt werden, der eine erhöhte Stabilität, Steifigkeit und Widerstandsfähigkeit aufweist. In derartigen Fahrzeugluftreifen kommen dabei herkömmlicherweise lediglich nicht-metallische Karkass-Festigkeitsträger zum Einsatz. Zudem weist ein entsprechend ausgerüsteter Fahrzeugluftreifen eine höhere Belastungsgrenze auf, beispielsweise in Form eines höheren Traglastindexes (auch Tragfähigkeitsindex oder Tragfähigkeitskennzahl genannt), verglichen mit Fahrzeugluftreifen gleicher Bauform und Größe aber mit den herkömmlich verwendeten textilen Festigkeitsträgern. Dies wäre mit Blick auf schwerer werdende Elektrofahrzeuge zukünftig von Vorteil, da die Reifendimensionen nicht zwingend vergrößert werden müssten.

Im Rahmen der vorliegenden Erfindung wird unter einer Bruchdehnung mit den o.g. prozentualen Werten verstanden, dass der jeweilige weder gummierte noch im Fahrzeugluftreifen verbaute Spulbandagen-Festigkeitsträger zu maximal 6%, vorzugsweise zu maximal 5,5%, insbesondere zu maximal 5%, gedehnt werden kann bevor er bricht. Eine derartige Bruchdehnung kann durch eine entsprechende Konstruktion (Verseilung, Verdrillung) des jeweiligen Festigkeitsträgers und/oder durch eine entsprechende Materialwahl des jeweiligen Festigkeitsträgers erreicht werden. Die Bruchdehnung wird dabei in Anlehnung an ASTM D2969-04 aus 2010 (für Filamente/Corde aus Stahl) bzw. ASTM D885 aus 2023 (für Filamente/Corde aus Textil und für hybride Filamente/Corde (Stahl und Textil)) festgelegt.

Vorzugsweise ist weiterhin vorgesehen, dass der mindestens eine Spulbandagen-Festigkeitsträger mit einer Bruchdehnung von zwischen 2% und 6%, vorzugsweise von zwischen 3% und 5,5%, besonders bevorzugt von zwischen 3% und 5%, aus einem textilen Material, insbesondere Aramid, und/oder aus einem metallischen Material, insbesondere Stahl, gefertigt ist.

Es sind also unterschiedliche Materialien als Festigkeitsträger in der Spulbandage möglich, mit denen sich diese Bruchdehnungen mit einer entsprechenden Verseilung erreichen lassen. Bei einer Ausführung der Spulbandagen-Festigkeitsträger aus einem metallischen Material, insbesondere ausschließlich aus einem metallischen Material, lässt sich die bereits angegebene verbesserte Recyclingfähigkeit und ein verringerter Aufwand für eine Runderneuerung noch besser gewährleisten, insbesondere dann, wenn die Festigkeitsträger sowohl in der Karkasse (für verbesserte Recyclingfähigkeit und verringerter Aufwand bei der Runderneuerung) als auch in dem Gürtel (falls vorhanden, für verbesserte Recyclingfähigkeit) ebenfalls ausschließlich aus einem metallischen Material gefertigt sind, d.h. die genannten Lagen jeweils frei von textilen Festigkeitsträgern sind bzw. solche nicht aufweisen. Dabei kann im Übrigen vorgesehen sein, dass der mindestens eine hoch-dehnfeste Spulbandagen-Festigkeitsträger ein Dehnungsverhalten aufweist, welches sich von dem Dehnungsverhalten des mindestens einen metallischen Karkass-Festigkeitsträgers unterscheidet. Es sind also unterschiedliche Umsetzungen in den jeweiligen Lagen möglich.

Vorzugsweise ist weiterhin vorgesehen, dass die Spulbandage ausschließlich Spulbandagen-Festigkeitsträger mit einer Bruchdehnung von zwischen 2% und 6%, vorzugsweise von zwischen 3% und 5,5%, besonders bevorzugt von zwischen 3% und 5%, aufweist. Bei einer solchen Ausführung kann in der gesamten Spulbandage also ein gleichmäßig hoch-dehnfester Aufbau mit gleichen Spulbandagen-Festigkeitsträgern erreicht werden, da der mindestens eine hoch-dehnfeste Spulbandagen-Festigkeitsträger der einzige Festigkeitsträger in Spulbandage ist.

Vorzugsweise ist weiterhin vorgesehen, dass der mindestens eine Spulbandagen-Festigkeitsträger in einem ersten Winkel zur Umfangsrichtung innerhalb der Spulbandage verläuft, wobei der erste Winkel zwischen 0° und 5°, vorzugsweise zwischen 0° und 4°, besonders bevorzugt zwischen 0 und 3°, ganz besonders bevorzugt von 0 bis 2°, beträgt.

Dadurch kann ein unerwünschtes Umfangswachstum des Fahrzeugluftreifens bei hohen Geschwindigkeiten vermieden werden, da der hoch-dehnfeste Aufbau der Spulbandage dann zusätzlich weniger nachgiebig ist. Dies ist gerade bei gegenüber der Umfangsrichtung angewinkelten Karkass-Festigkeitsträgern (Diagonalbauweise oder Winkelkarkasse) und auch bei angewinkelten Gürtel-Festigkeitsträgern (insofern ein Gürtel vorhanden ist) vorteilhaft. In dem Fall kann das Umfangswachstum durch diese Lagen nämlich weniger stark verhindert werden, dies aber durch die weniger stark nachgiebige Spulbandage ausgeglichen werden.

Vorzugsweise ist weiterhin vorgesehen, dass der Fahrzeugluftreifen ferner einen Gürtel aufweist, der radial außen von der Spulbandage bedeckt ist und der Gürtel ein, zwei oder drei Gürtellagen aufweist, wobei der Gürtel mindestens einen Gürtel-Festigkeitsträger aufweist.

Es ist also je nach gewünschter Auslegung ein variabler Aufbau mit oder ohne Gürtel möglich, wobei ein Gürtel je nach Aufbau zusätzlich für ein Zusammenhalten oder ein verringertes Umfangswachstum der Karkasse bei verringerter Kompression sorgen kann. Speziell bevorzugt ist dabei, dass ein Gürtel mit einer einzelnen oder zwei Gürtellagen vorgesehen ist. Dies ist vorzugsweise für Fahrzeugluftreifen für Personenkraftwagen vorgesehen. Ebenfalls speziell bevorzugt ist, einen Gürtel mit zwei oder drei Gürtellagen. Dies ist vorzugsweise für Fahrzeugluftreifen für leichte Nutzfahrzeuge vorgesehen.

Vorzugsweise ist weiterhin vorgesehen, dass in der jeweiligen Gürtellage des Gürtels jeweils unabhängig voneinander mindestens ein Gürtel-Festigkeitsträger aus einem metallischen Material, insbesondere Stahl, verläuft, wobei der Gürtel vorzugsweise ausschließlich Gürtel-Festigkeitsträger aus dem metallischen Material aufweist, d.h. der Gürtel frei von bzw. keine textilen Festigkeitsträger aufweist. Auch dadurch kann die Recyclingfähigkeit verbessert werden.

Die Spulbandagelage, in denen der Spulbandagen-Festigkeitsträger aufgespult wird, können dabei bevorzugt in axialer Richtung eine ununterbrochene (d.h. durchgängige) Lage bilden, indem der Spulkopf mit einem konstanten Vorschub so angesteuert wird, dass axial benachbarte Spulbandagen-Festigkeitsträger aneinanderliegen bzw. sich berühren. Vorzugsweise kann aber auch vorgesehen sein, dass zwischen zumindest einigen in axialer Richtung benachbarten Wickelungen des mindestens einen Spulbandagen-Festigkeitsträgers Lücken mit jeweils einer Lückenbreite angeordnet sind, wobei die Lückenbreiten der Lücken identisch sind oder sich die Lückenbreiten mit zunehmendem axialen Abstand der jeweiligen Lücke zu einem Reifenzenit des Fahrzeugluftreifens ändern, wobei die Lückenbreiten beispielsweise zwischen dem 0,5-fachen und dem 2-fachen eines Spulbandagen-Festigkeitsträger-Durchmessers der Spulbandagen-Festigkeitsträger betragen, wenn der mindestens eine bereitgestellte Spulbandagen-Festigkeitsträger einzeln aufgespult ist, oder
die Lückenbreiten beispielsweise zwischen dem 0,5-fachen und dem 1,5-fachen einer Gummistreifen-Breite eines Gummistreifens betragen, bevorzugt jedoch zwischen 3mm und 10mm, wenn der mindestens eine bereitgestellte Spulbandagen-Festigkeitsträger in dem Gummistreifen eingebettet aufgespult ist.

Es kann also auch eine "unterbrochene" Spulbandage erzeugt werden, beispielsweise durch sog. "gap spooling", d.h. in Teilbereichen berühren sich die einzelnen Spulbandagen-Festigkeitsträger bzw. die Gummistreifen mit den eingebetteten Spulbandagen-Festigkeitsträgern nicht. Vielmehr werden diese mit Unterbrechung(en) gespult. Dabei kann bevorzugt vorgesehen sein, dass
- die Lückenbreiten bei einer Anordnung der Lücken in Seitenabschnitten der Spulbandage mit zunehmendem axialem Abstand der jeweiligen Lücke zu dem Reifenzenit größer werden, und/oder
- die Lückenbreiten bei einer Anordnung der Lücken im Bereich des Reifenzenits, vorzugsweise über eine axiale Ausdehnung von zwischen 10% und 70% der Spulbandagen-Ausdehnung um den Reifenzenit, mit zunehmendem axialem Abstand zu dem Reifenzenit kleiner werden.

Dadurch kann verhindert werden, dass es in den Schulterabschnitten des Fahrzeugluftreifens zu einer zu hohen Kompression durch den jeweiligen Spulbandagen-Festigkeitsträger kommt, indem diese beispielsweise durch das Ausbilden von Lücken in dem Bereich der Gürtelkanten bzw. in den Seitenabschnitten "ausgedünnt" werden. Alternativ oder ergänzend dazu kann eine solche "Ausdünnung" im Bereich um den Reifenzenit bewirken, dass auch in diesem Bereich unterhalb der Spulbandage die Kompression auf die radial darunterliegenden Lagen verringert wird. Zudem können durch dieses "gap spooling" Material und Gewicht gespart werden.

Der mindestens eine hoch-dehnfeste Spulbandagen-Festigkeitsträger in der Spulbandage wird dabei vorzugsweise in einer umhüllenden Kautschukmischung (einzelne Ummantelung oder der Gummistreifen) verbaut, wobei diese Kautschukmischung wiederum einen festen Verbund mit anderen Kautschukmischungen im Fahrzeugluftreifen (z. B. im darunterliegenden Gürtel (falls vorhanden) oder der darunterliegenden Karkasse oder im darüber angeordneten Laufstreifen) eingehen kann. Es kann aber auch vorgesehen sein, dass der mindestens eine einzelne hoch-dehnfeste Spulbandagen-Festigkeitsträger in der Spulbandage ungummiert oder nur teilgummiert eingearbeitet wird. Vorzugsweise können der radial darunterliegende Gürtel (falls vorhanden) oder die radial darunterliegende Karkasse und/oder der radial darüber angeordnete Laufstreifen eine Haftmischung aufweisen, um einen ausreichenden Festigkeitsverbund zu dem jeweiligen Spulbandagen-Festigkeitsträger in der Spulbandage herzustellen.

Vorzugsweise ist weiterhin vorgesehen, dass der Karkasshochschlag über die Seitenwand verläuft, insbesondere bis radial unter den Gürtel (falls vorhanden), oder der Karkasshochschlag nicht in der Seitenwand verläuft, insbesondere lediglich innerhalb eines Wulstbandes zum Schützen des Wulstbereiches gegenüber einer Felge angeordnet ist, so dass ein radial oberes Ende des Karkassenhochschlags radial unterhalb eines radial unteren Endes der Seitenwand liegt, und
wobei der Wulstkern einen tropfenförmigen Querschnitt aufweist und radial oberhalb des Wulstkerns zwischen dem Wulstkern und der Karkasslage kein Apex angeordnet ist.

Je nach Konstruktion kann also die Seitenwand bis ggf. unter den Gürtel zusätzlich durch den Karkasshochschlag stabilisiert werden. In einer alternativen Ausführungsform kann der Karkasshochschlag aber auch verkürzt ausgeführt sein, wodurch sich der Vorteil ergibt, dass der metallische Karkasshochschlag durch das robustere Wulstband vollständig geschützt ist, wobei dieser Bereich auch ohnehin weniger stark komprimiert wird, insbesondere im Reifenlatsch, wenn der Fahrzeugluftreifen auf einem Untergrund abrollt. Der steife metallische Karkasshochschlag wird also auch weniger stark durch Kompressionen im Reifen beansprucht, so dass eine erhöhte Dauerhaltbarkeit gewährleistet werden kann.

Um dabei ausreichend Platz für den Karkasshochschlag innerhalb des Wulstbandes bereitzustellen, ist vorteilhafterweise vorgesehen, dass der Wulstkern einen tropfenförmigen Querschnitt aufweist und radial oberhalb des Wulstkerns zwischen dem Wulstkern und der Karkasslage kein Apex angeordnet ist bzw. der Fahrzeugluftreifen frei von einem Apex ist. Durch den tropfenförmigen Querschnitt kann eine zu starke Biegung des steiferen metallischen Karkasshochschlags vermieden werden, so dass auch weiterhin genügend Stabilität im Wulstbereich sichergestellt werden kann.

In den Zeichnungen zeigen:
Fig. 1 eine Schnittansicht eines Fahrzeugluftreifens;
Fig. 2A-2E Detailansichten einer Spulbandage des Fahrzeugluftreifens gemäß Fig. 1;
Fig. 3A, 3B Detailansichten des Gürtels des Fahrzeugluftreifens gemäß Fig. 1;
Fig. 3C-3F weitere Ausführungsformen der Spulbandage des Fahrzeugluftreifens gemäß Fig. 1;
Fig. 4A, 4B Detailansichten einer Karkasse des Fahrzeugluftreifens gemäß Fig. 1;
Fig. 4C eine Detailansicht eines Wulstbereiches des Fahrzeugluftreifens in einer weiteren Ausführungsform;
Fig. 5 ein Flussdiagramm eines Verfahrens zum Herstellen des Fahrzeugluftreifens gemäß Fig. 1;
Fig. 6A-6E eine Reifenaufbauanlage zur Durchführung des Verfahrens gemäß Fig. 5.

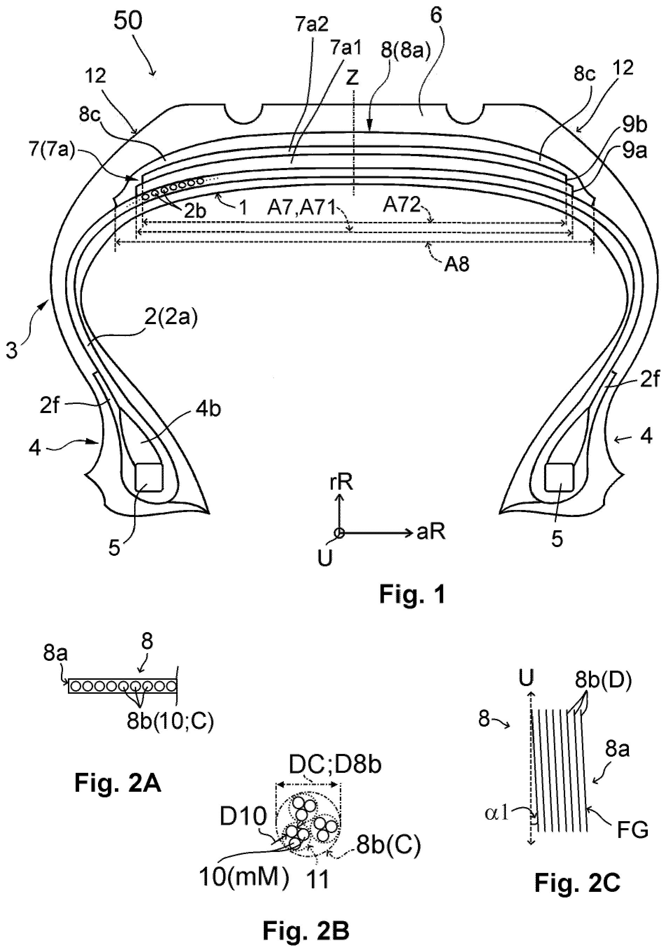

Figur 1 zeigt schematisch einen Fahrzeugluftreifen 50 in einem radialen Querschnitt, der für Personenkraftwagen oder für leichte Nutzfahrzeuge vorgesehen ist und dementsprechend einen Traglastindex (entspricht einer Traglast in kg pro Reifen) im Bereich von 71 bis 126 aufweist. Der Fahrzeugluftreifen 50 weist dabei zumindest auf:
- eine weitgehend luftundurchlässige Innenschicht 1;
- eine Karkasse 2, die beispielhaft in herkömmlicher Weise von einem Reifenzenit Z des Fahrzeugluftreifens 50 über Seitenwände 3 bis in Wulstbereiche 4 verläuft und dort durch Umschlingen zugfester Wulstkerne 5 verankert ist;
- einen radial außerhalb der Karkasse 2 befindlichen profilierten Laufstreifen 6, der vorzugsweise durch eine Cap und eine Base gebildet ist und ein Profil mit einer anwendungsspezifischen Profiltiefe aufweist;
- einen in radialer Richtung rR zwischen dem Laufstreifen 6 und der Karkasse 2 angeordneten Gürtel 7, der mindestens eine Gürtellage 7a aufweist, vorzugsweise zwei Gürtellagen 7a (wie abgebildet eine erste Gürtellage 7a1 und eine zweite Gürtellage 7a2) oder auch drei Gürtellagen 7a (nicht dargestellt); und
- eine den Gürtel 7 nach radial außen bedeckende Spulbandage 8, die mindestens eine Spulbandagenlage 8a aufweist.

Die Spulbandage 8 deckt gemäß der Ausführungsform in Fig. 1 Gürtelkanten 9 des Gürtels 7, d.h. sowohl eine erste Gürtelkante 9a der ersten Gürtellage 7a1 als auch eine zweite Gürtelkante 9b der zweiten Gürtellage 7a2, ab. Die Spulbandage 8 geht in axialer Richtung aR zu beiden Seiten hin über diese Gürtelkanten 9; 9a, 9b hinaus bzw. ist eine axiale Spulbandagen-Ausdehnung A8 der Spulbandage 8 größer als eine axiale Gürtel-Ausdehnung A7 des Gürtels 7. Die axiale Gürtel-Ausdehnung A7 wird dabei in der dargestellten Ausführung durch eine erste axiale Gürtel-Ausdehnung A71 der axial breiteren ersten Gürtellage 7a1 festgelegt. Dadurch können die Gürtelkanten 9; 9a, 9b für eine Schnelllauffestigkeit und Dauerhaltbarkeit niedergehalten und geschützt werden.

Die Spulbandage 8 beinhaltet gemäß dem Ausschnitt in Fig. 2A innerhalb der jeweiligen Spulbandagenlage 8a ferner ein oder mehrere Spulbandagen-Festigkeitsträger 8b in Form von einzelnen Drähten bzw. Filamenten 10 oder in Form von Corden C aus mehreren miteinander verdrehten oder verdrillten Filamenten 10 (s. Fig. 2B), wobei die ein oder mehreren Spulbandagen-Festigkeitsträger 8b parallel zueinander und im Wesentlichen entlang einer Umfangsrichtung U des Fahrzeugluftreifens 50 verlaufen. Die ein oder mehreren Spulbandagen-Festigkeitsträger 8b sind über die gesamte axiale Spulbandagen-Ausdehnung A8 der Spulbandage 8 ringförmig auf dem Außenumfang des Gürtels 7 aufgebracht, vorzugsweise spiralartig darauf aufgewickelt, wobei dies in Fig. 2A lediglich bereichsweise dargestellt ist. Ferner sind die ein oder mehreren Spulbandagen-Festigkeitsträger 8b mit Gummi ummantelt oder in eine Gummischicht eingebettet. Wie später noch erläutert kann dabei lediglich ein einzelner gummierter Spulbandagen-Festigkeitsträger 8b ringförmig auf dem Außenumfang des Gürtels 7 aufgewickelt werden oder aber mehrere nebeneinanderverlaufende Spulbandagen-Festigkeitsträger 8b innerhalb eines ringförmig auf dem Außenumfang des Gürtels 7 aufgewickelten Gummistreifens G.

Wie in Fig. 2C in einer schematischen Draufsicht dargestellt, verlaufen die ein oder mehreren Spulbandagen-Festigkeitsträger 8b innerhalb der jeweiligen Spulbandagelage 8a in einem ersten Winkel α1 zu der Umfangsrichtung U, wobei dieser erste Winkel α1 im vulkanisierten Zustand des Fahrzeugluftreifens 50 vorzugsweise zwischen 0° und 5°, vorzugsweise zwischen 0° und 4°, besonders bevorzugt zwischen 0 und 3°, ganz besonders bevorzugt von 0 bis 2°, beträgt. In dieser Ausführungsform soll durch diesen gegenüber der Umfangsrichtung U geringen ersten Winkel α1 verhindert werden, dass es zu einem unerwünschten Umfangswachstum des Fahrzeugluftreifens 50 bei hohen Geschwindigkeiten kommt.

Um dies zu erreichen, ist neben der Wahl eines geringen ersten Winkels α1 der ein oder mehreren Spulbandagen-Festigkeitsträger 8b weiterhin vorgesehen, dass die Spulbandage 8 insgesamt eine hohe Dehnungssteifigkeit bzw. eine hohe Dehnungsfestigkeit aufweist, um eine radiale Ausdehnung des radial darunterliegenden Materials effektiv unterdrücken zu können. Dazu ist der jeweilige Spulbandagen-Festigkeitsträger 8b derartig konstruiert und/oder aus einem derartigen Material gefertigt, dass eine Bruchdehnung D des jeweiligen Spulbandagen-Festigkeitsträgers 8b zwischen 2% und 6%, vorzugsweise zwischen 3% und 5,5%, besonders bevorzugt zwischen 3% und 5% beträgt. Die Bruchdehnung D wird dabei in Anlehnung an ASTM D2969-04 aus 2010 (für Corde aus Stahl) bzw. ASTM D885 aus 2023 (für Corde aus Textil und Hybridcorde (Stahl und Textil)) festgelegt, d.h. der jeweilige weder gummierte noch im Fahrzeugluftreifen 50 verbaute Spulbandagen-Festigkeitsträger 8b kann zu maximal 6%, vorzugsweise zu maximal 5,5%, insbesondere zu maximal 5%, gedehnt werden bevor er bricht. Auf diese Weise wird ein hoch-dehnfester Spulbandagen-Festigkeitsträger 8b und damit auch eine hoch-dehnfeste Spulbandage 8 bereitgestellt.

Als Material kann beispielsweise ein metallisches Material mM für den jeweiligen Spulbandagen-Festigkeitsträger 8b gewählt werden, bevorzugt Stahl. Das metallische Material mM liegt in Form von einzelnen Filamenten 10 oder bevorzugt in Form von Corden C aus miteinander verdrillten Filamenten 10 vor, wie in Fig. 2B beispielhaft dargestellt. Demnach werden mindestens zwei, vorzugsweise drei (wie dargestellt), metallische Filamente 10 einzeln miteinander verdrillt, um mehrere Stränge 11 zu bilden, wobei die einzelnen Stränge 11 wiederum ebenfalls miteinander verdrillt werden, um einen einzelnen cordartigen Spulbandagen-Festigkeitsträger 8b auszubilden. So kann beispielsweise ein einzelner Spulbandagen-Festigkeitsträger 8b in einem 3 x 3 Aufbau (drei verdrillte Stränge 11 mit jeweils drei verdrillten Filamenten 10) aufgebaut werden. Ein Cord C kann aber auch aus nur einem Strang 11 mit entsprechender Anzahl an miteinander verdrillten Filamenten 10 bestehen.

Im Falle eines solchen Cords C beträgt ein Filament-Durchmesser D10 der einzelnen verdrillten bzw. verseilten metallischen Filamente 10 beispielsweise zwischen 0,1mm und 0,3mm, vorzugsweise zwischen 0,14mm und 0,25mm. Daraus ergibt sich je nach Art der Verdrillung bzw. Verseilung ein Cord-Durchmesser DC von beispielsweise zwischen 0,3mm und 1,2mm, vorzugsweise zwischen 0,5mm und 1mm. Ein einzelnes metallisches Filament 10 weist dabei bereits eine Bruchdehnung D von beispielsweise ca. 2% auf. Werden die einzelnen Filamente 10 jedoch verdrillt erhöht sich die Bruchdehnung D des jeweiligen als Cord C ausgebildeten Spulbandagen-Festigkeitsträgers 8b auf beispielsweise zwischen 3,5% und 6%, je nach Art der Verdrillung bzw. Verseilung. Die Bruchdehnung D wird also nicht nur durch das Material bestimmt, sondern auch durch den strukturellen Aufbau des jeweiligen Spulbandagen-Festigkeitsträgers 8b.

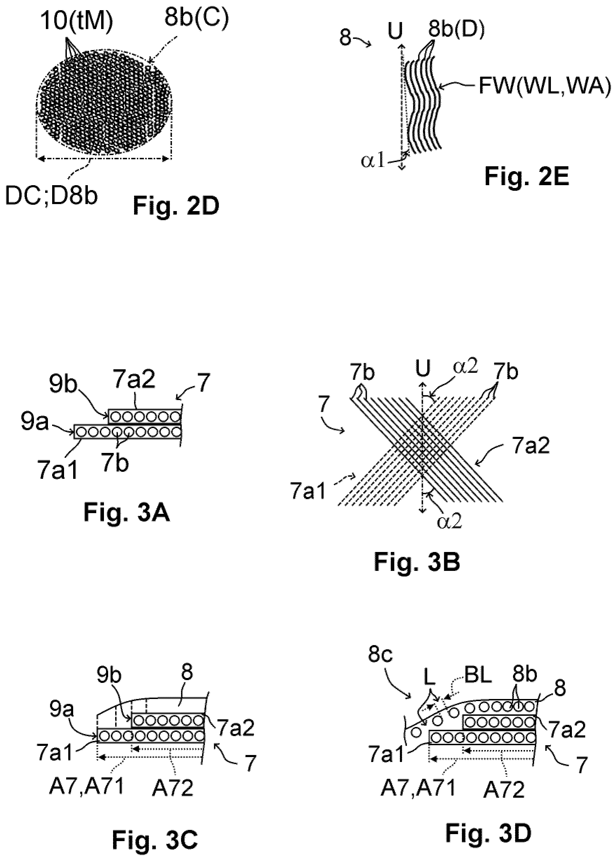

Als Material kann aber auch ein textiles Material tM verwendet werden, beispielsweise Aramid, aus dem der jeweilige Spulbandagen-Festigkeitsträger 8b bevorzugt in Form eines Multifilament-Garns bzw. eines Cords C aus mehreren miteinander verdrillten Filamenten 10, beispielsweise Aramid-Fasern, ausgebildet wird, wie in Fig. 2D im Querschnitt dargestellt. Demnach sind eine Vielzahl, beispielsweise mehr als 100, vorzugsweise mehr als 200, miteinander verdrillter textiler Filamente 10 zu einem Cord C zusammengefasst. Ein Cord-Durchmesser DC des jeweiligen textilen Cords C beträgt dabei wie auch bei den metallischen Filamenten 10 beispielsweise zwischen 0,3mm und 1,2mm, vorzugsweise zwischen 0,5mm und 1,2mm. In einer solchen Form als textiles Multifilament-Garn bzw. als textiler Cord C weist ein solcher Spulbandagen-Festigkeitsträger 8b je nach Art der Verdrillung bzw. Verseilung, d.h. ob als x1 Cord, wie in Fig. 2D dargestellt, oder als x2 Cord (mit zwei derartigen miteinander verdrillten textilen Corden C), bzw. in Abhängigkeit vom Twistlevel eine Bruchdehnung D von beispielsweise zwischen 2% und 6% auf. Dabei sind bei einem textilen Material tM bevorzugt x2 Corde vorgesehen, da sie eine bessere Ermüdungsbeständigkeit aufweisen.

Es können aber auch hybride Varianten vorgesehen sein. So können innerhalb eines Spulbandagen-Festigkeitsträgers 8b textile Filamente 10 mit metallischen Filamenten 10 kombiniert sein. Bei solchen hybriden Varianten ist dann das Material und/oder der strukturelle Aufbau des jeweiligen Spulbandagen-Festigkeitsträgers 8b derartig zu wählen, dass eine Bruchdehnung D von zwischen 2% und 6%, vorzugsweise zwischen 3% und 5,5%, besonders bevorzugt zwischen 3% und 5% erreicht wird.

In einer bevorzugten Ausführungsform ist jedoch vorgesehen, hauptsächlich, vorzugsweise ausschließlich, Spulbandagen-Festigkeitsträger 8b aus einem metallischen Material mM zu verwenden, um ergänzend zu der hohen Dehnungsfestigkeit auch eine verbesserte Recyclingfähigkeit des Fahrzeugluftreifens 50 bzw. auch eine Runderneuerung des Fahrzeugluftreifens 50 ohne erhöhten Aufwand zu ermöglichen.

Die gezielte Wahl des Materials und/oder der Konstruktion des jeweiligen Spulbandagen-Festigkeitsträgers 8b zum Erreichen der o.g. erforderlichen Bruchdehnung D (bzw. der hohen Dehnungsfestigkeit) sowie die gezielte Wahl des geringen ersten Winkels α1 ist insbesondere dann von Vorteil, wenn eine verringerte Längssteifigkeit bzw. eine verringerte Dehnungsfestigkeit des radial darunterliegenden Gürtels 7 zu kompensieren ist. In einigen Ausführungsformen des Fahrzeugluftreifens 50 kann nämlich vorgesehen sein, dass die in Fig. 3A schematisch dargestellten Gürtel-Festigkeitsträger 7b in den ein oder mehreren Gürtellagen 7a; 7a1, 7a2 des Gürtels 7 nicht wie herkömmlich unter einem flachen zweiten Winkel α2 von weniger als 35° zur Umfangsrichtung U verlaufen, sondern wie in einer schematischen Draufsicht in Fig. 3B dargestellt unter einem zweiten Winkel α2 zur Umfangsrichtung U verlaufen, der zwischen 35° und 55°, vorzugsweise zwischen 40° und 45°, liegt. In einer solchen Ausführung ist die Dehnungsfestigkeit bzw. Längssteifigkeit des gesamten Gürtels 7 begrenzt, so dass der Gürtel 7 selbst das Umfangswachstum des Fahrzeugluftreifens 50 bei größeren Geschwindigkeiten nur noch bedingt verhindern kann. Dies wird in der o.g. Ausführung durch die Konstruktion der Spulbandage 8, insbesondere durch eine entsprechende Wahl von D und α1, ausgeglichen.

Bei zwei Gürtellagen 7a; 7a1, 7a2, wie in Fig. 1, 3A und 3B beispielhaft dargestellt, verlaufen die Gürtel-Festigkeitsträger 7b innerhalb der jeweiligen Gürtellage 7a; 7a1, 7a2 jeweils unter dem angegebenen zweiten Winkel α2 zur Umfangsrichtung U, wobei die Gürtel-Festigkeitsträger 7b in jeder Gürtellage 7a; 7a1, 7a2 aber eine andere Steigungsrichtung aufweisen, so dass sich die radial übereinanderliegenden Gürtel-Festigkeitsträger 7b kreuzen bzw. einen sog. Kreuzverband ausbilden.

Die Gürtel-Festigkeitsträger 7b können dabei wie auch der jeweilige Spulbandagen-Festigkeitsträger 8b aus einem metallischen Material mM gefertigt sein, bevorzugt aus Stahl, wobei metallische Gürtel-Festigkeitsträger 7b auch mit Gürtel-Festigkeitsträgern 7b aus einem textilen Material tM, beispielsweise Polyester, Nylon, Rayon, Aramid, oder dergleichen kombiniert sein können. Bevorzugt ist jedoch vorgesehen, lediglich Gürtel-Festigkeitsträger 7b aus einem metallischen Material mM zu verwenden, um eine verbesserte Recyclingfähigkeit des Fahrzeugluftreifens 50 zu ermöglichen. Dabei liegen auch die Gürtel-Festigkeitsträger 7b in Form von einzelnen Drähten bzw. Filamenten 10 und/oder in Form von Corden C aus mehreren miteinander verdrehten oder verdrillten **Filamenten** 10 vor. Ferner sind auch die Gürtel-Festigkeitsträger 7b vorzugsweise mit Gummi ummantelt oder in eine Gummischicht eingebettet.

Der zweite Winkel α2 der Gürtel-Festigkeitsträger 7b von zwischen 35° und 55°, vorzugsweise zwischen 40° und 45°, kann beispielsweise dann gewählt werden, wenn die radial darunterliegende Karkasse 2 in den einzelnen Karkasslagen 2a Karkass-Festigkeitsträger 2b in Form von in Gummi eingebetteten oder ummantelten Drähten bzw. Filamenten 10 oder Corden C aus mehreren Filamenten 10 aufweist, die gemäß der Erfindung zumindest teilweise, vorzugsweise ausschließlich, aus einem metallischen Material mM gefertigt sind, besonders bevorzugt aus Stahl. Dadurch kann nicht nur ein robuster Fahrzeugluftreifen 50 bereitgestellt werden, sondern auch eine verbesserte Recyclingfähigkeit erzielt werden.

Für den Fall einer Karkasse 2 aus metallischen Karkass-Festigkeitsträgern 2b ist gleichzeitig dafür zu sorgen, dass die Karkass-Festigkeitsträger 2b im Betrieb des Fahrzeugluftreifens 50 weniger stark komprimiert werden, insbesondere um eine gute Dauerhaltbarkeit der Karkass-Festigkeitsträger 2b unter dynamischen Belastungen zu erreichen. Dies wird gerade dadurch erreicht, dass die Gürtel-Festigkeitsträger 7b wie beschrieben unter einem möglichst großen zweiten Winkel α2 von zwischen 35° und 55°, vorzugsweise zwischen 40° und 45° zur Umfangsrichtung U verlaufen. Die Gürtel-Festigkeitsträger 7b können in dem Fall unter dynamischer Belastung einfacher nachgeben und es wirkt eine geringere Kompression auf die radial darunterliegende Karkasse 2.

Zusammenfassend wird also bei einem Fahrzeugluftreifen 50 für Personenkraftwagen und/oder leichte Nutzfahrzeuge auf eine Karkasse 2 mit metallischen Karkass-Festigkeitsträgern 2b zurückgegriffen, wobei auf die daraus resultierenden Eigenschaften durch eine entsprechende Konstruktion des Gürtels 7 sowie der Spulbandage 8 wie beschrieben reagiert wird. Je nach Auslegung und Anwendung für einen solchen Fahrzeugluftreifen 50 für Personenkraftwagen **und/oder** für leichte Nutzfahrzeuge kann bei Verwendung einer Karkasse 2 mit metallischen Karkass-Festigkeitsträgern 2b auch vorgesehen sein, den Gürtel 7 und/oder die Spulbandage 8 abweichend zu den oben beschriebenen Ausführungen aufzubauen, wie nachfolgend beispielhaft beschrieben:
So kann gemäß einer Ausführung beispielsweise vorgesehen sein, dass die axiale Spulbandagen-Ausdehnung A8 auch kleiner oder gleich der axialen Gürtel-Ausdehnung A7 bzw. der ersten axialen Gürtel-Ausdehnung A71 der axial breiteren bzw. radial unten liegenden ersten Gürtellage 7a1 ist, wie in Fig. 3C für verschiedene Varianten gestrichelt angedeutet. Demnach kann die axiale Spulbandagen-Ausdehnung A8 der Spulbandage 8
- gleich der ersten axialen Gürtel-Ausdehnung A71 sein, oder
- kleiner der ersten axialen Gürtel-Ausdehnung A71 aber größer einer zweiten axialen Gürtel-Ausdehnung A72 der radial oben liegenden zweiten Gürtellage 7a2 sein, oder
- kleiner oder gleich der zweiten axialen Gürtel-Ausdehnung A72 sein.

Der Gürtel 7, der in axialer Richtung aR zwischen Schulterabschnitten 12 des Fahrzeugluftreifens 50 verläuft, wird dann an der ersten Gürtelkante 9a der ersten Gürtellage 7a1 und ggf. auch an der zweiten Gürtelkante 9b der zweiten Gürtellage 7a2 nicht mehr vollständig von der Spulbandage 8 abgedeckt. Gegenüber der Ausführung in Fig. 1 fallen also Seitenabschnitte 8c der Spulbandage 8 weg bzw. verläuft der jeweilige auf den Gürtel 7 aufgewickelte Spulbandagen-Festigkeitsträger 8b, wenn überhaupt, nur noch zu einem geringen Anteil bis in die Schulterabschnitte 12 des Fahrzeugluftreifens 50 hinein.

Dadurch kann in Kombination mit dem gewählten größeren zweiten Winkel α2 der Gürtel-Festigkeitsträger 7b (geringere longitudinale Dehnfestigkeit) und in Verbindung mit dem metallischen Material mM der Karkass-Festigkeitsträger 2b verhindert werden, dass es in den Schulterabschnitten 12 des Fahrzeugluftreifens 50 zu einer zu hohen Kompression durch den jeweiligen Spulbandagen-Festigkeitsträger 8b kommt. Zudem wirkt sich die geringere Masse und geringe Wärmeentwicklung an den Gürtelkanten 9a, 9b positiv auf das Hochgeschwindigkeitsverhalten des Fahrzeugluftreifens 50 aus.

Diese Ausführung kann für bestimmte Anwendungen des Fahrzeugluftreifens 50 auch bei einer Spulbandage 8 Anwendung finden, bei der der jeweilige Spulbandagen-Festigkeitsträger 8b keine Bruchdehnung D von zwischen 2% und 6%, vorzugsweise zwischen 3% und 5,5%, besonders bevorzugt zwischen 3% und 5% aufweist. Auch in dem Fall lässt sich eine zu starke Kompression durch den jeweiligen Spulbandagen-Festigkeitsträger 8b in den Schulterabschnitten 12 des Fahrzeugluftreifens 50 verhindern. Bei hoch-dehnfesten Spulbandagen-Festigkeitsträgern 8b tritt diese Kompression jedoch verstärkt auf, so dass die verkürzte axiale Ausdehnung einen noch stärkeren Vorteil bringt.

Anstatt oder ergänzend zu dieser verkürzten Ausführung der Spulbandage 8 kann vorgesehen sein, dass der jeweilige Spulbandagen-Festigkeitsträger 8b derartig auf den radial darunterliegenden Gürtel 7 aufgewickelt ist, dass zumindest in den Seitenabschnitten 8c der Spulbandage 8 zwischen axial nebeneinanderliegenden Wickelungen der Spulbandagen-Festigkeitsträger 8b eine Lücke L mit einer Lückenbreite BL ausgebildet wird. Die Lückenbreite BL kann dabei konstant sein oder sie kann mit zunehmendem axialem Abstand zum Reifenzenit Z größer werden. Dabei kann in den Seitenabschnitten 8c der Spulbandage 8 eine Lückenbreite BL von beispielsweise zwischen dem 0,5-fachen und dem 2-fachen eines Spulbandagen-Festigkeitsträger-Durchmessers D8b, d.h. des Cord-Durchmessers DC der als Corde C ausgeführten Spulbandagen-Festigkeitsträger 8b bzw. des Filament-Durchmessers D10 der als einzelne Filamente 10 ausgeführten Spulbandagen-Festigkeitsträger 8b, gewählt werden.

In radialer Richtung rR oberhalb der ersten Gürtelkante 9a der ersten Gürtellage 7a1 und ggf. auch der zweiten Gürtelkante 9b der zweiten Gürtellage 7a2 werden die Wickelungen des jeweiligen Spulbandagen-Festigkeitsträgers 8b also "ausgedünnt". Auch dadurch kann verhindert werden, dass es in Kombination mit dem gewählten größeren zweiten Winkel α2 der Gürtel-Festigkeitsträger 7b (geringere longitudinale Dehnfestigkeit) und in Verbindung mit dem metallischen Material mM der Karkass-Festigkeitsträger 2b in den Schulterabschnitten 12 des Fahrzeugluftreifens 50 zu einer zu hohen Kompression durch den jeweiligen Spulbandagen-Festigkeitsträger 8b kommt. Zudem können Material gespart und das Gewicht des Fahrzeugluftreifens 50 reduziert werden.

Gemäß einer weiteren Ausführung ist vorgesehen, dass die zwischen den beiden Wulstbereichen 4 verlaufenden Karkass-Festigkeitsträger 2b der Karkasse 2 einen dritten Winkel α3 zur Umfangsrichtung U einschließen, der
- bei einer Radialbauweise des Fahrzeugluftreifens 50 (im vulkanisierten Zustand des Fahrzeugluftreifens 50) zwischen 70° und 90° beträgt, oder
- bei einer Diagonalbauweise des Fahrzeugluftreifens 50 (im vulkanisierten Zustand des Fahrzeugluftreifens 50) zwischen 40° und 50°, vorzugsweise 45°, beträgt.

Die Ausführung als Fahrzeugluftreifen 50 in Diagonalbauweise hat dabei den Vorteil, dass Antriebs- und Bremskräfte in Form von Zug mit nur geringen Energieverlusten von den Karkass-Festigkeitsträgern 2b aufgenommen werden können, da diese aufgrund ihrer Anwinkelung gegenüber der Umfangsrichtung U beim Antreiben bzw. Bremsen weniger stark verschoben werden und dadurch weniger Energie in Form von Wärme verloren geht. Insbesondere im Hinblick auf elektrobetriebene Fahrzeuge ist dieses von Interesse, da nicht nur beim Antreiben ein höherer Wirkungsgrad erzielt wird, sondern auch beim Bremsen ein größerer Teil der Bremsenergie durch Rekuperation in den Energiespeicher zurückgeführt werden kann, da weniger Energie im Fahrzeugluftreifen 50 dissipiert wird. Im Betrieb ergibt sich also insgesamt eine Effizienzsteigerung.

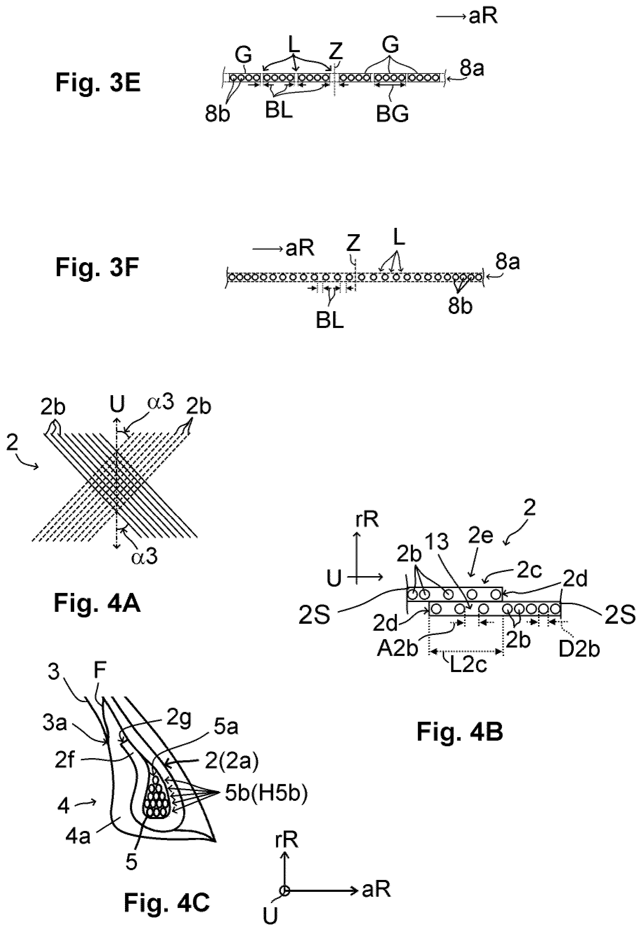

Gemäß einer bevorzugten Ausführungsform, die auch in Fig. 4A dargestellt ist, sind dabei innerhalb der Karkasse 2 zwei Karkasslagen 2a vorgesehen, wobei jede Karkasslage 2a jeweils unter dem dritten Winkel α3 zur Umfangsrichtung U verlaufende Karkass-Festigkeitsträger 2b aufweist. Die Karkasslage 2a ist dabei wie in Fig. 1 dargestellt um die zugfesten Wulstkerne 5 umgeschlagen bzw. hochgeschlagen, d.h. auf der axial äußeren Seite des jeweiligen Wulstbereiches 5 bildet sich ein Karkassenhochschlag 2f. In jeder Karkasslage 2a haben die Karkass-Festigkeitsträger 2b allerdings eine andere Steigungsrichtung, so dass sich die radial übereinanderliegenden Karkass-Festigkeitsträger 2b kreuzen bzw. einen sog. Kreuzverband ausbilden. Dadurch bleiben die Karkass-Festigkeitsträger 2b aus dem metallischen Material insgesamt noch relativ nachgiebig, so dass sich bei hohen Geschwindigkeiten ein geringerer Rollwiderstand ergibt.

Der Karkasshochschlag 2f verläuft dabei gemäß der in Fig. 1 dargestellten Standard-Konstruktion nicht bis zu den Seitenwänden 3. In einer davon abweichenden sog. C-Konstruktion (nicht dargestellt) kann der Karkasshochschlag 2f allerdings auch bis unter den Gürtel 7 bzw. bis unter die Spulbandage 8 geführt werden.

In einer optionalen Ausführung kann bei einer solchen Ausführung der Karkasse 2 aus zwei Karkasslagen 2a mit metallischen Karkass-Festigkeitsträgern 2b im Kreuzverband der radial darüberliegende Gürtel 7, beispielsweise mit metallischen Gürtel-Festigkeitsträgern 7b und im Kreuzverband (s. Fig. 3B), entfallen. Dadurch kann Material gespart werden und daher ebenfalls die Recyclingfähigkeit des Fahrzeugluftreifens 50 verbessert werden. Ist jedoch ein Gürtel 7 vorgesehen, so kann aufgrund der Ausführung der Karkasse 2 als Diagonalkarkasse ein zweiter Winkel α2 der Gürtel-Festigkeitsträger 7b von zwischen 20° und 55°, vorzugsweise zwischen 30° und 35°, gewählt werden, da die Diagonalkarkasse aufgrund des dritten Winkels α3 der Karkass-Festigkeitsträger 2b bereits eine geringere Kompression erfährt.

Zur Optimierung der Kompression auf die Karkasse 2 kann die auch weiterhin radial darüberliegende Spulbandage 8 in ihren Seitenabschnitten 8c verkürzt ausgeführt sein und/oder Spulbandagen-Festigkeitsträger 8b aufweisen, die wie oben anhand von Fig. 3D beschrieben eine entsprechend vergrößerte Lücke L aufweisen, so dass die Spulbandagen-Festigkeitsträger 8b in den Seitenabschnitten 8c der Spulbandage 8 "ausgedünnt" werden.

Ferner kann bei einer Ausführung als Fahrzeugluftreifen 50 in Radialbauweise oder in Diagonalbauweise vorgesehen sein, dass zwischen benachbarten Karkass-Festigkeitsträgern 2b in Randbereichen 2c von Karkass-Streifen 2S, aus denen die jeweilige Karkasselage 2a in Umfangsrichtung U zusammengesetzt ist, ein Festigkeitsträger-Abstand A2b gelassen wird, der zwischen dem 1-fachen und dem 1,5-fachen eines Karkass-Festigkeitsträger-Durchmessers D2b der Karkass-Festigkeitsträger 2b entspricht, wie in Fig. 4B dargestellt. Dies kann beispielsweise dadurch erreicht werden, dass bereits in den beiden Randbereichen 2c einer kalandrierten Materialbahn, innerhalb derer die parallel zueinander verlaufenden Karkass-Festigkeitsträger 2b in Gummi eingebettet sind, jeder zweite Karkass-Festigkeitsträger 2b weggelassen wird, d.h. es wird ein entsprechend großer Zwischenraum 13 zwischen den Karkass-Festigkeitsträgern 2b mit dem Festigkeitsträger-Abstand A2b ausgebildet. Aus dieser kalandrierten Materialbahn werden dann die Karkass-Streifen 2S in entsprechender Länge und mit dem entsprechenden Winkel der Karkass-Festigkeitsträger 2b zugeschnitten und an ihren Randbereichen 2c jeweils durch Überlappsplicen mit weiteren Karkass-Streifen 2S zusammengefügt. Mehrere derartig zusammengefügte Karkass-Streifen 2S bilden dann also die in Umfangsrichtung U ausgedehnte Karkasslage 2a aus.

Die Randbereiche 2c erstrecken sich dabei über eine Randlänge L2c von beispielsweise zwischen 3mm und 10mm, vorzugsweise über 5mm, ausgehend von einer Randkante 2d des jeweiligen Karkass-Streifens 2S. Mit derartig ausgeführten Randbereichen 2c des jeweiligen Karkass-Streifens 2S kann erreicht werden, dass beim Überlappsplicen während der Präparation der jeweiligen Karkasslage 2a, d.h. beim flächigen Übereinanderlegen der beiden Randbereiche 2c von benachbarten Karkass-Streifen 2S in einem Überlappungsbereich 2e, die Karkass-Festigkeitsträger 2b in den radial übereinanderliegenden Randbereichen 2c in Umfangsrichtung U versetzt zueinander liegen. Insbesondere liegen diese dabei derartig versetzt zueinander, dass ein Karkass-Festigkeitsträger 2b innerhalb eines Karkass-Streifens 2S in radialer Richtung rR benachbart zu einem Zwischenraum 13 innerhalb des jeweils radial angrenzenden Karkass-Streifens 2S angeordnet ist.

Auf diese Weise befinden sich im Überlappungsbereich 2e zwischen zwei Karkass-Streifen 2S nicht wie herkömmlich beim Überlappsplicen doppelt so viele Karkass-Festigkeitsträger 2b wie außerhalb des Überlappungsbereiches 2e innerhalb des jeweiligen Karkass-Streifens 2S, sondern eine ähnliche Anzahl an Karkass-Festigkeitsträgern 2b wie außerhalb des Überlappungsbereiches 2e innerhalb des jeweiligen Karkass-Streifens 2S. Dadurch ergibt sich insbesondere bei den hier verwendeten Karkass-Festigkeitsträgern 2b aus einem metallischen Material mM ergänzend der Vorteil, dass das Modul und die Biegefestigkeit (und damit die Rückstellmomente) jeweils innerhalb der mehreren Überlappungsbereiche 2e auf dem Umfang der Karkasslage 2a weitestgehend dem Modul und der Biegefestigkeit außerhalb der Überlappungsbereiche 2e innerhalb des jeweiligen Karkass-Streifens 2S bzw. der daraus gebildeten Karkasslage 2a entspricht. Dadurch kann zudem ein unbeabsichtigtes Öffnen des Karkassenhochschlags 2f der Karkasse 2 vermieden werden.

Bei einer Ausführung als Fahrzeugluftreifen 50 in Radialbauweise mit nur einer Karkasslage 2a kann außerdem vorgesehen sein, dass die Karkass-Festigkeitsträger 2b unter einem dritten Winkel α3 zur Umfangsrichtung U von größer als 70° aber kleiner als 90° verlaufen, so dass eine sog. Winkelkarkasse ausgebildet wird. Durch eine solche leichte Anwinkelung der Karkass-Festigkeitsträger 2b gegenüber der Umfangsrichtung U kann erreicht werden, dass sich der Wirkungsgrad des Fahrzeugluftreifens 50 erhöht und sich aufgrund der metallischen Karkass-Festigkeitsträger 2b auch ein Rollwiderstand verbessert. Dabei kann beispielsweise eine Standard-Konstruktion des Karkasshochschlags 2f, wie in Fig. 1 dargestellt, oder bevorzugt eine C-Konstruktion des Karkasshochschlags 2f, der zumindest bis unter den Gürtel 7 bzw. bis unter die Spulbandage 8 geführt wird, vorgesehen sein. Im Falle einer solchen Winkelkarkasse kann in dem radial darüberliegenden Gürtel 7 eine Gürtellage 7a weggelassen werden, wobei die technisch Wirkung bereits durch eine leichte Anwinkelung der Karkass-Festigkeitsträger 2b kompensiert werden kann.

Weiterhin ist wie in Fig. 4C dargestellt vorgesehen, dass bei den Karkass-Festigkeitsträgern 2b aus einem metallischen Material mM der Karkasshochschlag 2f bei einer Standard-Konstruktion nicht bis in die Seitenwand 3 ragt, sondern lediglich innerhalb eines den Wulstbereich 4 gegenüber der Felge schützenden Wulstbandes 4a (Rimstrip) angeordnet ist. Im Wulstbereich 4 wird der aufgepumpte Fahrzeugluftreifen 50 in der Regel über das robuster ausgeführte Wulstband 4a gegen die Felge gedrückt, so dass der Fahrzeugluftreifen 50 in diesem Bereich vor Beschädigungen geschützt ist. An einer Übergangs-Flanke F geht das Wulstband 4a in radialer Richtung rR in die Seitenwand 3 über, wobei ein radial oberes Ende 2g des Karkassenhochschlags 2f radial unterhalb dieser Übergangs-Flanke F liegt.

Insbesondere liegt das radial obere Ende 2g des Karkassenhochschlags 2f auch radial unterhalb eines radial unteren Endes 3a der Seitenwand 3, das im Querschnitt den radial untersten Punkt der Seitenwand 3 auf der jeweiligen Reifenseite darstellt. Damit ergibt sich eine Länge zwischen einer Wulstkernoberseite 5a des Wulstkerns 5, die durch die radial oberste Lage des Wulstkerns 5 gebildet wird, und dem radial oberen Ende 2g des Karkassenhochschlags 2f von beispielsweise zwischen 10mm und 30 mm.

Bei einer solchen Ausführung wird der Karkasshochschlag 2f zusätzlich geschützt, da dieser Bereich radial unterhalb der Übergangs-Flanke F ohnehin weniger stark komprimiert wird, insbesondere im Reifenlatsch, wenn der Fahrzeugluftreifen 50 auf einem Untergrund abrollt. Zudem ist das Material des Wulstbandes 4a robuster ausgeführt als beispielsweise die Seitenwand 3, so dass Kräfte auch dadurch besser abgefangen werden.

Weiterhin ist bei einer solchen Ausführung vorgesehen, dass radial oberhalb des Wulstkerns 5 zwischen diesem und der Karkasslage 2a kein Apex 4b (wie in Fig. 1 mit radial längerem Karkasshochschlag 2f) angeordnet ist. Um in dem Fall keinen zu starken Knick in der Karkasslage 2a im Bereich der Wulstkernoberseite 5a zu erhalten, weist der Wulstkern 5 einen tropfenförmigen Querschnitt auf. Dies kann beispielsweise durch einen Aufbau des Wulstkerns 5 in mehreren Lagen 5b mit einer Lagenhöhe H5b (bzw. einer Drahtdicke der den Wulstkern 5 bildenden Drähte) von jeweils beispielsweise zwischen 1.2mm und 1.7mm gemäß einer der folgenden Konfigurationen bzw. Gliederungen erreicht werden:
3-4-3-2-1 (wie dargestellt),
3-4-5-4-3-2-1,
2-3-2-1,
4-5-4-3-2-1 oder
3-4-5-4-3-2-1.

Dadurch wird der Wulstkern 5 nach radial außen immer spitzer, wodurch der Wegfall des Apex 4b kompensiert werden kann. Der Karkasshochschlag 2f kann daher bereits mit einer geringeren radialen Ausdehnung gegenüber der Ausführung in Fig. 1 enden und dadurch lediglich innerhalb des Wulstbandes 4a verlaufen, um die o.g. Vorteile zu erreichen.

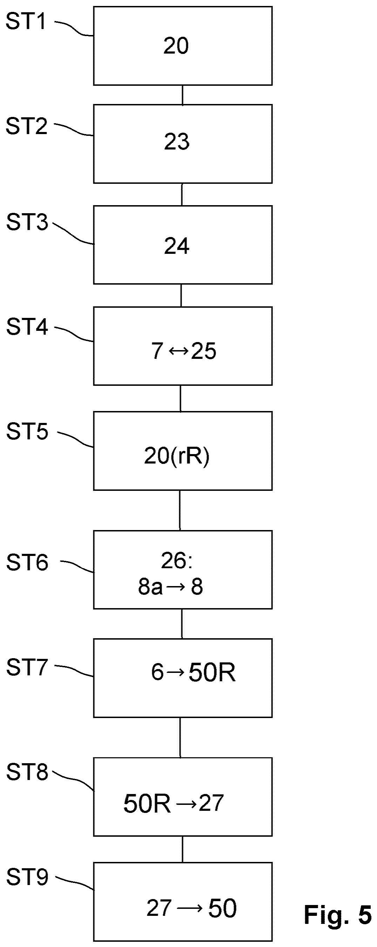

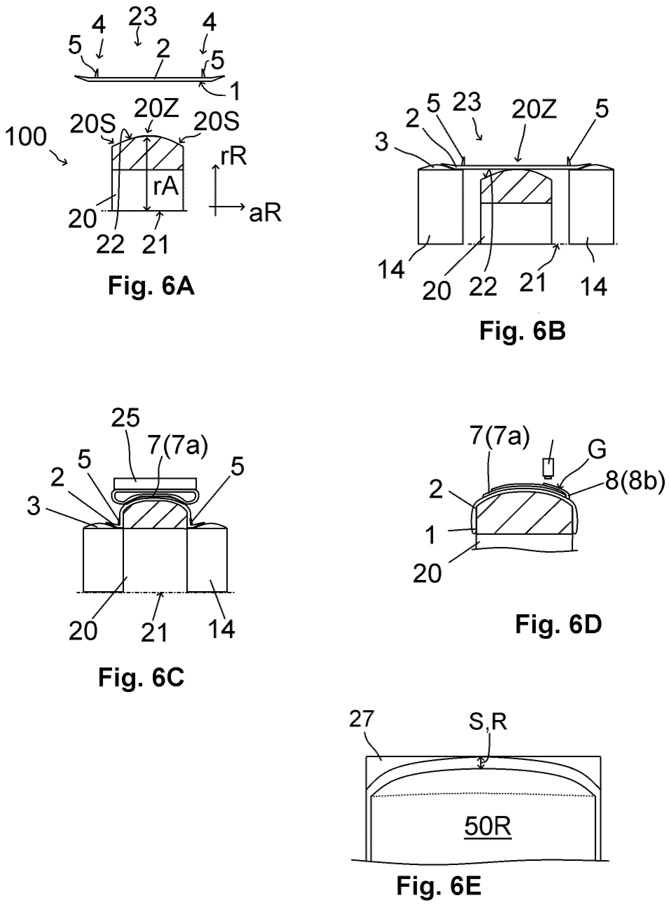

Nachfolgend wird anhand der Figuren 5 und 6A-6E der Reifenaufbauprozess beschrieben, mithilfe dessen insbesondere der in Fig. 1 dargestellte Fahrzeugluftreifen 50 für einen Personenkraftwagen und/oder für leichte Nutzfahrzeuge mit einer Karkasse 2 aus metallischen Karkass-Festigkeitsträgern 2b wie oben beschrieben in den einzelnen Ausführungsformen hergestellt werden kann. Problematisch ist dabei, dass sich der aus den einzelnen Bestandteilen (Innenschicht 1, Karkasse 2, Gürtel 7, Spulbandage 8, Laufstreifen 6, Wulstkern 5, etc.) zusammengebaute Reifenrohling 50R ("grüner Reifen", d.h. im unvulkanisierten Zustand) durch Einwirkung von Druck und Temperatur während des Einformens in die Vulkanisierungsform 27 im Reifenzenit Z um bis zu 4% (in radialer Richtung rR) und auch in den Schulterabschnitten 12 zu einem geringeren Prozentsatz ausdehnt, bevor der endgültige Fahrzeugluftreifen 50 aus elastischem Gummi und mit seinen unlösbar miteinander verbundenen Bestandteilen sowie dem eingebrachten Profil in dem Vulkanisierungswerkzeug fertiggestellt ist.

Eine solche radiale Ausdehnung um bis zu 4% ist jedoch mit einem Reifenrohling 50R, der wie beschrieben zumindest eine Karkasse 2 mit metallischen Karkass-Festigkeitsträgern 2b und in bestimmten Ausführungen auch eine Spulbandage 8 mit hoch-dehnfesten Spulbandagen-Festigkeitsträgern 8b aufweist, die in einem geringen ersten Winkel α1 zu der Umfangsrichtung U von vorzugsweise zwischen 0° und 5°, vorzugsweise zwischen 0° und 4°, besonders bevorzugt zwischen 0 und 3°, ganz besonders bevorzugt von 0° bis 2°, verlaufen, problematisch. Insbesondere über den Reifenquerschnitt erfolgt zum einen eine ungleichmäßige Dehnung der jeweiligen Materialien, so dass es zu Materialverschiebungen relativ zu den umgebenen Bauteilen sowie zu einer ungleichen Spannungsverteilung in den jeweiligen Festigkeitsträgern 2b, 7b, 8b kommen kann. Zudem ist eine Änderung des ersten Winkels α1 der Spulbandagen-Festigkeitsträger 8b zum Ausgleichen der radialen Ausdehnung bei der Vulkanisierung nur begrenzt möglich, insbesondere bei geringen ersten Winkeln α1, wie beschrieben. Daher wird auf das nachfolgend beschriebene Herstellungsverfahren zurückgegriffen, um einen derartigen Aufbau des Reifenrohlings 50R bzw. des Fahrzeugluftreifens 50 in einfacher und zuverlässiger Weise zu ermöglichen:
Gemäß Fig. 5 und Fig. 6A wird in einem ersten Schritt ST1 zunächst eine Bautrommel 20 als Bestandteil einer Reifenaufbauanlage 100 bereitgestellt, die um eine Trommelachse 21 verdreht werden kann. Die Bautrommel 20 besteht in der Regel aus über den Umfang verteilten Segmenten, die jeweils in radialer Richtung rR beweglich sind, um ein Verkleinern und ein Vergrößern des Außendurchmessers der Bautrommel 20 zu ermöglichen.

Die Bautrommel 20 ist dabei gemäß einer bevorzugten Ausführung oberflächlich konturiert, d.h. ihre Außenseite 22 ist nicht-planar ausgeführt, sondern weist eine konvex gekrümmte Form bzw. eine abgerundete Querschnittskontur auf, wie in Fig. 6A dargestellt. Die Außenseite 22 weist also einen radialen Achs-Abstand rA zur Trommelachse 21 auf, der im Zenit 20Z der Bautrommel 20 maximal ist, wobei der radiale Achs-Abstand rA vom Zenit 20Z ausgehend beidseitig in axialer Richtung aR zu Schulterbereichen 20S der Bautrommel 20 hin abnimmt. Die Außenseite 22 der Bautrommel 20 wird damit an die Querschnittskontur der Bestandteile des fertiggestellten Fahrzeugluftreifens 50, d.h. der Karkasse 2, des Gürtels 7 bzw. der Spulbandage 8, weitgehend bzw. annähernd angepasst.

In einem zweiten Schritt ST2 wird ein ringförmig umlaufendes Reifenpaket 23 in radialer Richtung rR oberhalb der Bautrommel 20 positioniert, das zumindest aus der Innenschicht 1, der Karkasse 2, und den Wulstbereichen 4 mit den Wulstkernen 5 und ggf. weiteren Bauteilen besteht, die jeweils ringförmig umlaufen. Das Reifenpaket 23 wird dabei vorzugsweise auf einer separaten Trommel (nicht dargestellt) aus den einzelnen Bestandteilen aufgebaut und über eine Transfereinrichtung (nicht dargestellt) radial oberhalb der Außenseite 22 der Bautrommel 20 positioniert. Alternativ kann aber auch vorgesehen sein, die einzelnen Bestandteile direkt auf der Bautrommel 20 einzeln aufzuspulen, um das Reifenpaket 23 direkt auf der Bautrommel 20 aufzubauen.

Die Karkasse 2 ist gemäß der jeweiligen Ausführungsform wie oben beschrieben aufgebaut, d.h. mit ein oder zwei Karkasslagen 2a jeweils mit Karkass-Festigkeitsträgern 2b aus einem metallischen Material, insbesondere Stahl. Die Karkasslagen 2a sind dabei wie in Fig. 1 oder 4C dargestellt in einer Standard-Konstruktion um die zugfesten Wulstkerne 5 umgeschlagen bzw. hochgeschlagen, d.h. auf der axial äußeren Seite des jeweiligen Wulstbereiches 5 bildet sich der Karkassenhochschlag 2f, entweder mit Apex 4b (s. Fig. 1) oder ohne Apex (s. Fig. 4C). Es kann aber auch eine C-Konstruktion wie oben beschrieben vorliegen. Die Karkasslagen 2a selbst sind dann beispielsweise wie oben beschrieben bei zwei Karkasslagen 2a in einem Kreuzverband (Fig. 4A) (Diagonalbauweise) oder bei einer Karkasslage 2a in Radialbauweise mit 90°oder in Radialbauweise mit größer als 70° und kleiner als 90° (Winkelkarkasse) verlaufenden Karkass-Festigkeitsträgern 2b aufgebaut, wobei die Karkass-Festigkeitsträger 2b bei einer Radialbauweise mit einer Winkelkarkasse oder bei einer Diagonalbauweise in Randbereichen 2c der die Karkasslage 2a ausbildenden Karkass-Streifen 2S mit dem verbreiterten Festigkeitsträger-Abstand A2b zueinander liegen.

In einem dritten Schritt ST3 wird das aufgebaute Reifenpaket 23 mittig fixiert, beispielsweise in herkömmlicher Weise über (axial) beidseitig der Bautrommel 20 angeordnete Klemmvorrichtungen 24, auf denen auch bereits die Seitenwände 3 positioniert sein können. In diesem Zustand, der in Fig. 6B dargestellt ist, befindet sich die Bautrommel 20 (bzw. deren Segmente) noch in ihrem eingefahrenen Zustand, in dem das Reifenpaket 23 zwischen den Klemmvorrichtungen 24 eingespannt ist und die Außenseite 22 der Bautrommel 20 im Zenit 20Z lediglich tangential berührt.

In einem vierten Schritt ST4 wird der Gürtel 7 mit den einzelnen Gürtellagen 7a; 7a1, 7a2 der abseits der Bautrommel 20 auf einer separaten Gürteltrommel (nicht dargestellt) aufgebaut wird, über eine Transfereinrichtung 25 bereitgestellt und mittig oberhalb der Bautrommel 20 positioniert. Der Gürtel 7 ist dabei gemäß einer der jeweiligen Ausführungsform wie oben beschrieben aufgebaut, d.h. es können ein oder mehrere Gürtellagen 7a; 7a1, 7a2 mit Gürtel-Festigkeitsträgern 7b aus einem metallischen Material mM oder einem textilen Material tM vorgesehen sein, die vorzugsweise unter dem zweiten Winkel α2 von zwischen 35° und 55° zur Umfangsrichtung U verlaufen und bei zwei Gürtellagen 7a; 7a1, 7a2 ggf. auch im Kreuzverband zueinander positioniert sind.

In einem fünften Schritt ST5 wird die Bautrommel 20 in radialer Richtung rR vergrößert, wie in Fig. 6C dargestellt, wobei gleichzeitig die Klemmvorrichtungen 24 in axialer Richtung aR nachgeführt werden. Dadurch passt sich das Reifenpaket 23 insbesondere in dessen zentralem Bereich in der dargestellten Ausführungsform an die konvex gekrümmte Form der Außenseite 22 der Bautrommel 20 an, so dass auch das Reifenpaket 23 eine gekrümmte Form annimmt. Gleichzeitig wird durch diese radiale Expansion der Bautrommel 20 die radial oben liegende Karkasse 2 des Reifenpaketes 23 gegen den radial darüber positionierten Gürtel 7 gedrückt.

Durch entsprechende Maßnahmen legt sich der Gürtel 7 flächig über seine gesamte axiale Gürtel-Ausdehnung A7 und vollumfänglich an das gekrümmte Reifenpaket 23 bzw. die radial obenliegende Karkasse 2 an, so dass auch der Gürtel 7 in dieser Ausführungsform an die gekrümmte Form der Außenseite 22 der Bautrommel 20 angepasst wird. Das flächige Anlegen des Gürtels 7 an das Reifenpaket 23 bzw. die Karkasse 2 kann beispielsweise durch eine aufblasbare Manschette an der Transfereinrichtung 25 oder durch eine radiale Verformbarkeit der Transfereinrichtung 25 oder durch andere Mittel erfolgen, die bewirken, dass der Gürtel 7 vollumfänglich und über seine gesamte axiale Gürtel-Ausdehnung A7 flächig gegen das bereits konturierte bzw. gekrümmte Reifenpaket 23 gedrückt wird.

In einigen der oben beschriebenen Ausführungen kann der Gürtel 7 auch entfallen, insbesondere bei einer Karkasse 2 aus metallischen Karkass-Festigkeitsträgern 2b im Kreuzverband (vgl. Fig. 4A). In diesem Fall entfällt der vierte Schritt ST4 und durch die radiale Expansion der Bautrommel 20 in dem fünften Schritt ST5 wird dann lediglich das Reifenpaket 23 durch entsprechende Mittel an die konvex gekrümmte Form der Außenseite 22 der Bautrommel 20 angepasst.

In einem sechsten Schritt ST6 wird mindestens ein Spulbandagen-Festigkeitsträger 8b bereitgestellt und damit anschließend radial oberhalb des konturierten bzw. gekrümmten Gürtels 7 (oder bei Weglassen des Gürtels 7 direkt radial oberhalb des konturierten bzw. gekrümmten Reifenpakets 23 bzw. der konturierten bzw. gekrümmten Karkasse 2) eine Spulbandage 8 mit ein oder mehreren Spulbandagenlagen 8a aufgebracht. Die Spulbandage 8 passt sich demnach in dieser Ausführungsform ebenfalls flächig über ihre gesamte axiale Spulbandagen-Ausdehnung A8 und vollumfänglich an den gekrümmten Gürtel 7 bzw. an das gekrümmte Reifenpaket 23 bzw. die radial obenliegende Karkasse 2 an, so dass auch die Spulbandage 8 an die gekrümmte Form der Außenseite 22 der Bautrommel 20 angepasst wird.

Das Aufbringen der Spulbandage 8 geschieht bevorzugt durch Aufspulen eines oder mehrerer Gummistreifen G über einen beliebigen Spulkopf 26, wie beispielhaft in Fig. 6D dargestellt, so dass sich ein oder mehrere Spulbandagenlagen 8a innerhalb der Spulbandage 8 ausbilden. Dabei sind in entsprechender Weise mehrere, beispielsweise zwischen drei und fünf, Spulbandagen-Festigkeitsträger 8b in dem jeweiligen Gummistreifen G eingebettet. Der Gummistreifen G weist demnach eine Gummistreifen-Breite BG von beispielsweise zwischen 3mm und 10mm, insbesondere zwischen 4mm und 7mm, auf. Das Aufspulen der Gummistreifen G kann dabei überlappend oder Stoß an Stoß erfolgen. Es kann aber auch vorgesehen sein, dass ein einzelner Spulbandagen-Festigkeitsträger 8b in ein oder mehreren Spulbandagenlagen 8a über den Spulkopf 26 aufgespult wird, wobei dieser Spulbandagen-Festigkeitsträger 8b dann entsprechend gummiert ist, d.h. mit einer Gummierung ummantelt ist.

Gemäß einer weiteren Ausführungsform, die vorzugsweise ergänzend zu der oberflächlich konturierten Bautrommel 20 zum Einsatz kommt, ist vorgesehen, dass der oder die Spulbandagen-Festigkeitsträger 8b im Bereich des Reifenzenits Z derartig aufgespult werden, dass sich zwischen zumindest einigen der in axialer Richtung aR benachbarten Wickelungen der Spulbandagen-Festigkeitsträger 8b eine Lücke L mit einer bestimmten Lückenbreite BL ausbildet, wie in einer Vergrößerung in Fig. 3E und Fig. 3F dargestellt. Dies ist vergleichbar zu der Art der Wicklung der Spulbandagen-Festigkeitsträger 8b in den Seitenabschnitten 8c der Spulbandage 8, wie anhand von Fig. 3D beschrieben. Die Lücken L befinden sich dabei vorzugsweise beidseitig des Reifenzenits Z über eine axiale Ausdehnung von zwischen 10% und 70% der Spulbandagen-Ausdehnung A8, bevorzugt in symmetrischer Weise um den Reifenzenit Z.

Gemäß Fig. 3E ist dabei vorgesehen, dass mehrere Spulbandagen-Festigkeitsträger 8b über die Gummistreifen G aufgespult werden, wobei die Lücke L in dieser Ausführung dadurch ausgebildet wird, dass durch einen entsprechenden Vorschub des Spulkopfes 26 in axialer Richtung aR benachbarte Gummistreifen G mit der Lückenbreite BL beabstandet zueinander aufgewickelt werden. Daher entsteht nicht zwischen jeder Wicklung der Spulbandagen-Festigkeitsträger 8b eine Lücke L, sondern nur zwischen den jeweils axial außen bzw. axial innen liegenden Spulbandagen-Festigkeitsträgern 8b von axial benachbarten Gummistreifen G. Die Lückenbreite BL kann in dem Fall zwischen dem 0,5-fachen und dem 1,5-fachen der Gummistreifen-Breite BG liegen, bevorzugt jedoch zwischen 3mm und 10mm.

Gemäß Fig. 3F ist vorgesehen, dass ein einzelner Spulbandagen-Festigkeitsträger 8b aufgewickelt wird, wobei durch einen entsprechenden Vorschub des Spulkopfes 26 vorzugsweise zwischen jeder axial aneinandergrenzenden Wicklung des Spulbandagen-Festigkeitsträgers 8b eine Lücke L mit einer bestimmten Lückenbreite BL ausgebildet wird. Die Lückenbreite BL kann in dem Fall zwischen dem 0,5-fachen und dem 2-fachen des Spulbandagen-Festigkeitsträger-Durchmessers D8b, d.h. des Cord-Durchmessers DC der als Corde C ausgeführten Spulbandagen-Festigkeitsträger 8b bzw. des Filament-Durchmessers D10 der als einzelne Filamente 10 ausgeführten Spulbandagen-Festigkeitsträger 8b, betragen.

In beiden Ausführungen kann die Lückenbreite BL sämtlicher ausgebildeter Lücken L konstant sein oder aber mit zunehmendem Abstand zum Reifenzenit Z abnehmen. Auch durch solche Lücken L kann Material und Gewicht gespart werden. Zudem kann dadurch die Kompression auf die radial darunterliegenden Lagen verringert werden.

Die bereitgestellte Spulbandage 8 ist dabei gemäß einer der jeweiligen Ausführungsformen wie oben beschrieben aufgebaut, d.h. mit hoch-dehnfesten Spulbandagen-Festigkeitsträgern 8b, die eine Bruchdehnung D von zwischen 2% und 6%, vorzugsweise zwischen 3% und 5,5%, besonders bevorzugt zwischen 3% und 5% aufweisen. Der jeweilige Spulbandagen-Festigkeitsträger 8b ist also beispielsweise aus einem metallischen Material mM oder einem textilen Material tM gefertigt und die Spulbandage 8 weist eine axiale Spulbandagen-Ausdehnung A8 auf, die je nach Anwendung größer, kleiner oder gleich der ersten und/oder zweiten axialen Gürtel-Ausdehnung A71, A72 ist.

Die Konstruktion und Verseilung der Spulbandagen-Festigkeitsträger 8b ist dabei gemäß der jeweiligen Ausführungsform daran anzupassen, welches Material für die Spulbandagen-Festigkeitsträger 8b verwendet wird und wie stark sich der fertige Reifenrohling 50R beim nachfolgenden Einformen in die Vulkanisierungsform durch Einwirkung von Druck und Temperatur in radialer Richtung rR ausdehnt, da sich diese radiale Ausdehnung wie bereits beschrieben in Form von Zugkräften in Umfangsrichtung U auf die Spulbandage 8 bzw. die einzelnen Spulbandagen-Festigkeitsträger 8b auswirkt.

In der einfachsten Form kann für geringe radiale Ausdehnungen während des Einformens von beispielsweise 1% (bezogen auf den Radius des Reifenrohlings 50R) ein Spulbandagen-Festigkeitsträger 8b gewählt werden, der eine geradlinige Form FG aufweist, wie in Fig. 2C für einen geringen ersten Winkel α1 dargestellt. Die geringfügige radiale Ausdehnung des Reifenrohlings 50R kann in dem Fall von dem jeweiligen Spulbandagen-Festigkeitsträger 8b beschädigungsfrei in Form von Zugkräften in Umfangsrichtung U aufgenommen werden, auch für den Fall, dass der jeweilige Spulbandagen-Festigkeitsträger 8b unter dem oben beschriebenen geringen ersten Winkel α1 verläuft und/oder die oben beschriebene Bruchdehnung D von zwischen 2% und 6%, vorzugsweise zwischen 3% und 5,5%, besonders bevorzugt zwischen 3% und 5% aufweist. Zur weiteren Optimierung kann ergänzend die oben beschriebene Lücke L zwischen einzelnen Spulbandagen-Festigkeitsträgern 8b im Bereich des Reifenzenits Z ausgebildet werden.

Gemäß einer alternativen Ausführung kann jedoch auch vorgesehen sein, dass der einzeln aufgespulte gummierte Spulbandagen-Festigkeitsträger 8b oder die in den aufgespulten Gummistreifen G eingebetteten mehreren Spulbandagen-Festigkeitsträger 8b in Umfangsrichtung U in einer Wellenform FW verlaufen, wie beispielhaft in Fig. 2E dargestellt. Die durch die radiale Ausdehnung bewirkten Zugkräfte in Umfangsrichtung U auf die Spulbandagen-Festigkeitsträger 8b bewirken dann, dass sich die Wellenlänge WL des Spulbandagen-Festigkeitsträgers 8b vergrößert und sich die Wellenamplitude WA verringert, die "Welle" also auseinandergezogen wird.

Der Spulbandagen-Festigkeitsträger 8b nähert sich also mit steigender radialer Ausdehnung des Reifenrohlings 50R während des Einformens an eine geradlinige Form FG an, um die erhöhten Zugkräfte abzufangen, wobei in diesem Stadium mit nahezu geradlinigem Verlauf eine sehr hohe Umfangssteifigkeit in der Spulbandage 8 vorliegt, insbesondere dann, wenn ein kleiner erster Winkel α1 von zwischen 0° und 5°, vorzugsweise zwischen 0° und 4°, besonders bevorzugt zwischen 0 und 3°, ganz besonders bevorzugt von 0 bis 2°, für die Spulbandagen-Festigkeitsträger 8b gewählt wird.

Vorzugsweise wird die Wellenform FW dabei in ihrer Wellenlänge WL und in ihrer Wellenamplitude WA derartig gewählt, dass nach Abschluss der Vulkanisierung, insbesondere bereits nach dem Einformen, eine nahezu geradlinige Form FG vorliegt bzw. sich an eine solche zumindest angenähert wird. Dadurch wird nicht nur die erwähnte sehr hohe Umfangssteifigkeit erreicht, sondern auch die Wahl eines hoch-dehnfesten Spulbandagen-Festigkeitsträgers 8b ermöglicht, selbst dann, wenn ein sehr geringer erster Winkel α1 für die Spulbandagen-Festigkeitsträger 8b von zwischen 0° und 5°, vorzugsweise zwischen 0° und 4°, besonders bevorzugt zwischen 0 und 3°, ganz besonders bevorzugt von 0 bis 2°, gewählt wird.

Grundsätzlich kann auch diese Ausführung mit gewellten Spulbandagen-Festigkeitsträgern 8b mit der oben beschriebene Lücke L zwischen einzelnen gewellten Spulbandagen-Festigkeitsträgern 8b im Bereich des Reifenzenits Z kombiniert werden, um eine verringerte Kompression sowohl zentral auf den Gürtel 7 als auch auf die Karkasse 2 zu erreichen.

Grundsätzlich kann für derartige Spulbandagen-Festigkeitsträger 8b mit einer Wellenform FW in Umfangsrichtung U auch eine auf der Außenseite 22 planare und unkonturierte oder in axialer Richtung aR weniger stark konturierte Bautrommel 20 zum Einsatz kommen. Die erhöhte radiale Ausdehnung während des Einformens, die dann beispielsweise auch bis zu 4% betragen kann, kann dann durch eine Wellenform FW mit entsprechend gewählter Wellenlänge WL und Wellenamplitude WA ausgeglichen werden, bei der nach Abschluss der Vulkanisierung, insbesondere bereits nach Abschluss des Einformens, eine nahezu geradlinige Form FG vorliegt bzw. sich an eine solche angenähert wird. Zur optimalen Kompensation kann bei einer unkonturierten Bautrommel 20 auch die oben beschriebene Lücke L zwischen einzelnen gewellten Spulbandagen-Festigkeitsträgern 8b im Bereich des Reifenzenits Z vorgesehen sein.

In einem siebenten Schritt ST7 werden die noch fehlenden Bestandteile, insbesondere der Laufstreifen 6, bereitgestellt und der Reifenrohling 50R damit in weiteren Schritten fertig aufgebaut. Anschließend wird der fertiggestellte Reifenrohling 50R in einem achten Schritt ST8 in eine Vulkanisierungsform 27 gebracht bzw. darin eingeformt und anschließend unter Druck aufgeheizt, um den endgültigen Fahrzeugluftreifen 50 aus elastischem Gummi und mit seinen unlösbar miteinander verbundenen Bestandteilen sowie dem eingebrachten Profil fertigzustellen. Der Fahrzeugluftreifen 50 kann dann anschließend in einem neunten Schritt ST9 nach Abschluss der Vulkanisierung aus der Vulkanisierungsform 27 entnommen werden.

Dabei ist der Vorteil der Verwendung einer bereits in axialer Richtung aR konturierten Bautrommel 20 der, dass vor dem Einformen des fertiggestellten Reifenrohlings 50R in die Vulkanisierungsform 27 in radialer Richtung rR nur noch ein geringer Spalt S zwischen dem Reifenrohling 50R und der Vulkanisierungsform 27 verbleibt, wie in Fig. 6E (gestrichelt der Zustand mit unkonturierter Bautrommel) schematisch angedeutet. Die jeweiligen Bestandteile des Reifenrohlings 50R wurden nämlich bei dessen Aufbau über die konvex gekrümmte Außenseite 22 bereits an die Form des fertigen Fahrzeugluftreifens 50 angepasst. In dem nachfolgenden Vulkanisationsvorgang ergibt sich also beim Einformen durch das Erhitzen eine minimierte Resterhebung R in radialer Richtung rR, die dem Spalt S entspricht, über die die Bestandteile des Fahrzeugluftreifens 50 nachgeben, wobei diese Resterhebung R vorzugsweise im Bereich von 1% (bezogen auf den Radius des Reifenrohlings 50R) liegt.

Derartige radiale Ausdehnungen um die verbleibende Resterhebung R sind bei den verwendeten Bestandteilen, insbesondere der Karkasse 2 aus metallischen Karkass-Festigkeitsträgern 2b und je nach Ausführung auch aus Spulbandagen-Festigkeitsträgern 8b, die unter dem ersten Winkel α1 von zwischen 0° und 5°, vorzugsweise zwischen 0° und 4°, besonders bevorzugt zwischen 0 und 3°, ganz besonders bevorzugt von 0 bis 2°, zur Umfangsrichtung U verlaufen, in der Regel noch unproblematisch aufnehmbar. Dies wirkt sich besonders vorteilhaft auf eine Ausführung des Fahrzeugluftreifens 50 aus, bei dem hoch-dehnfeste Spulbandagen-Festigkeitsträger 8b verwendet werden, wie oben beschrieben. In dem Fall können nämlich die Spulbandagen-Festigkeitsträger 8b aufgrund der stark verringerten Nachgiebigkeit in Umfangsrichtung U nur eine begrenzte Zugkraft aufnehmen, wobei diese bei einer Resterhebung R im Bereich von 1% während des Einformens in die Vulkanisierungsform 27 aber in der Regel ausreichend ist.

Wie beschrieben kann jedoch statt oder ergänzend zu der konturierten Bautrommel 20 auch ein in Umfangsrichtung U wellenförmiger Spulbandagen-Festigkeitsträger 8b verwendet werden, um selbst bei einer Resterhebung R von größer als 1% eine zusätzliche Nachgiebigkeit zu erzeugen, wobei die Wellenform FW in ihrer Wellenlänge WL und Wellenamplitude WA wie beschrieben an die Resterhebung R bzw. den vor dem Einformen verbliebenen Spalt S angepasst ist, so dass sich nach Abschluss der Vulkanisierung bzw. bereits nach dem Einformen ein weitestgehend geradliniger Verlauf der Spulbandagen-Festigkeitsträger 8b unter dem entsprechend gewählten ersten Winkel α1 ergibt. Auch das Ausbilden der Lücke L kann entsprechend kombiniert werden.

### Bezugszeichenliste

- 1: Innenschicht
- 2: Karkasse
- 2a: Karkasslage
- 2b: Karkass-Festigkeitsträger
- 2c: Randbereiche der Karkasslage 2a
- 2d: Randkante der Karkasslage 2a
- 2e: Überlappungsbereich
- 2f: Karkassenhochschlag
- 2g: radial oberes Ende des Karkassenhochschlags 2f
- 3: Seitenwand
- 3a: radial unteres Ende der Seitenwand 3
- 4: Wulstbereich
- 4a: Wulstband
- 4b: Apex
- 5: Wulstkern
- 5a: Wulstkernoberseite
- 5b: Lagen des Wulstkerns
- 6: Laufstreifen
- 7: Gürtel
- 7a: Gürtellage
- 7a1: erste Gürtellage
- 7a2: zweite Gürtellage
- 7b: Gürtel-Festigkeitsträger
- 8: Spulbandage
- 8a: Spulbandagenlage
- 8b: Spulbandagen-Festigkeitsträger
- 8c: Seitenabschnitte der Spulbandage 8
- 9a: erste Gürtelkante der ersten Gürtellage 7a1
- 9b: zweite Gürtelkante der zweiten Gürtellage 7a2
- 10: Filament
- 11: Strang
- 12: Schulterabschnitt
- 13: Zwischenraum
- 20: Bautrommel
- 20S: Schulterbereich der Bautrommel 20
- 20Z: Zenit der Bautrommel 20
- 21: Trommelachse
- 22: Außenseite der Bautrommel 20
- 23: Reifenpaket
- 24: Klemmvorrichtung
- 25: Transfereinrichtung
- 26: Spulkopf
- 27: Vulkanisierungsform
- 50: Fahrzeugluftreifen
- 50R: Reifenrohling
- 100: Reifenaufbauanlage

- α1: erster Winkel
- α2: zweiter Winkel
- α3: dritter Winkel
- A2b: Festigkeitsträger-Abstand
- A7: axiale Gürtel-Ausdehnung
- A71: erste axiale Gürtel-Ausdehnung der ersten Gürtellage 7a1
- A72: zweite axiale Gürtel-Ausdehnung der zweiten Gürtellage 7a2
- A8: axiale Spulbandagen-Ausdehnung
- aR: axiale Richtung
- BG: Gummistreifen-Breite
- BL: Lückenbreite
- C: Cord
- D: Bruchdehnung
- D2b: Karkass-Festigkeitsträger-Durchmesser
- D8b: Spulbandagen-Festigkeitsträger-Durchmesser
- D10: Filament-Durchmesser
- DC: Cord-Durchmesser
- F: Übergangs-Flanke
- FG: geradlinige Form
- FW: Wellenform
- G: Gummistreifen
- H5b: Lagenhöhe der Lagen 5b
- mM: metallisches Material
- L: Lücke
- L2c: Randlänge
- R: Resterhebung
- rA: radialer Achs-Abstand
- rR: radiale Richtung
- S: Spalt
- tM: textiles Material
- U: Umfangsrichtung
- WL: Wellenlänge
- WA: Wellenamplitude
- Z: Reifenzenit

## Patentansprüche

1. Fahrzeugluftreifen (50) für Personenkraftwagen und/oder leichte Nutzfahrzeuge, umfassend einen Laufstreifen (6), eine Karkasse (2) und eine Spulbandage (8) aus einer oder mehr als einer Spulbandagenlage (8a) mit einer axialen Spulbandagen-Ausdehnung (A8), wobei
- die Spulbandage (8) in radialer Richtung (rR) oberhalb der Karkasse (2) und in radialer Richtung (rR) unterhalb des Laufstreifens (6) angeordnet ist und die Spulbandage (8) mindestens einen Spulbandagen-Festigkeitsträger (8b) aufweist,
- die Karkasse (2) mindestens eine Karkasslage (2a) aufweist, wobei jede Karkasslage (2a) zwischen Wulstbereichen (4) des Fahrzeugluftreifens (50) verläuft und wobei jede Karkasslage (2a) aus mindestens zwei in Umfangsrichtung (U) benachbarten Karkass-Streifen (2S) zusammengesetzt ist, wobei jeder Karkass-Streifen (2S) mindestens einen Karkass-Festigkeitsträger (2b) aufweist und Randbereiche (2c) von in Umfangsrichtung (U) benachbarten Karkass-Streifen (2S) derselben Karkasslage (2a) innerhalb eines Überlappungsbereiches (2e) zusammengefügt sind,
**dadurch gekennzeichnet, dass**
- in der mindestens einen Karkasslage (2a) innerhalb der jeweiligen Karkass-Streifen (2S) jeweils ausschließlich Karkass-Festigkeitsträger (2b) aus einem metallischen Material (mM) verlaufen,
- in zumindest einem der Randbereiche (2c) des jeweiligen Karkass-Streifens (2S), vorzugsweise in beiden Randebereichen (2c), in Umfangsrichtung (U) benachbarte Karkass-Festigkeitsträger (2b) des jeweiligen Karkass-Streifens (2S) einen Festigkeitsträger-Abstand (A2b) zueinander aufweisen, der mindestens einem Karkass-Festigkeitsträger-Durchmesser (D2b) der Karkass-Festigkeitsträger (2b) entspricht; und
- der Fahrzeugluftreifen (50) einen Traglastindex im Bereich von 71 bis 126 aufweist.

2. Fahrzeugluftreifen (50) nach Anspruch 1,
**dadurch gekennzeichnet, dass**
der Festigkeitsträger-Abstand (A2b) in dem zumindest einen Randbereich (2c) des jeweiligen Karkass-Streifens (2S) zwischen dem 1-fachen und dem 2-fachen, vorzugsweise zwischen dem 1-fachen und dem 1,5-fachen, des Karkass-Festigkeitsträger-Durchmessers (D2b) der Karkass-Festigkeitsträger (2b) beträgt.

3. Fahrzeugluftreifen (50) nach einem der vorhergehenden Ansprüche,
**dadurch gekennzeichnet, dass**
sich die Randbereiche (2c) des jeweiligen Karkass-Streifens (2S) über eine Randlänge (L2c) von zwischen 3mm und 10mm, vorzugsweise von 5mm, ausgehend von einer Randkante (2d) in den jeweiligen Karkass-Streifen (2S) erstrecken und/oder der Festigkeitsträger-Abstand (A2b) zwischen den in Umfangsrichtung (U) benachbarten Karkass-Festigkeitsträgern (2b) ausschließlich in den Randbereichen (2c) des jeweiligen Karkass-Streifens (2S) ausgebildet ist.

4. Fahrzeugluftreifen (50) nach einem der vorhergehenden Ansprüche,
**dadurch gekennzeichnet, dass**
die Randbereiche (2c) in Umfangsrichtung (U) benachbarter Karkass-Streifen (2S) derselben Karkasslage (2a) derartig zusammengefügt sind, vorzugsweise überlappend zusammengefügt sind, dass in dem Überlappungsbereich (2e) angeordnete Karkass-Festigkeitsträger (2b), die unterschiedlichen Karkass-Streifen (2S) aber derselben Karkasslage (2a) zugeordnet sind, auch in Umfangsrichtung (U) versetzt zueinander liegen, insbesondere derartig, dass Karkass-Festigkeitsträger (2b) des einen Karkass-Streifens (2S) innerhalb des Überlappungsbereiches (2e) radial oberhalb oder radial unterhalb eines Zwischenraums (13) zwischen zwei Karkass-Festigkeitsträgern (2b) des jeweils anderen Karkass-Streifens (2S) liegen.

5. Fahrzeugluftreifen (50) nach einem der vorhergehenden Ansprüche,
**dadurch gekennzeichnet, dass**
der mindestens eine Spulbandagen-Festigkeitsträger (8b) eine Bruchdehnung (D) von zwischen 2% und 6%, vorzugsweise von zwischen 3% und 5,5%, besonders bevorzugt von zwischen 3% und 5%, aufweist.

6. Fahrzeugluftreifen (50) nach Anspruch 5,
**dadurch gekennzeichnet, dass**
der mindestens eine Spulbandagen-Festigkeitsträger (8b) mit einer Bruchdehnung (D) von zwischen 2% und 6%, vorzugsweise von zwischen 3% und 5,5%, besonders bevorzugt von zwischen 3% und 5%, aus einem textilen Material (tM), insbesondere Aramid, und/oder aus einem metallischen Material (mM), insbesondere Stahl, gefertigt ist.

7. Fahrzeugluftreifen (50) nach Anspruch 5 oder 6,
**dadurch gekennzeichnet, dass**
die Spulbandage (8) ausschließlich Spulbandagen-Festigkeitsträger (8b) mit einer Bruchdehnung (D) von zwischen 2% und 6%, vorzugsweise von zwischen 3% und 5,5%, besonders bevorzugt von zwischen 3% und 5%, aufweist.

8. Fahrzeugluftreifen (50) nach einem der vorhergehenden Ansprüche,
**dadurch gekennzeichnet, dass**
die Karkasse (2) ausschließlich Karkass-Festigkeitsträger (2b) aus Stahl aufweist.

9. Fahrzeugluftreifen (50) nach einem der vorhergehenden Ansprüche,
**dadurch gekennzeichnet, dass**
der Fahrzeugluftreifen (50) ferner einen Gürtel (7) aufweist, der radial außen von der Spulbandage (8) bedeckt ist und der Gürtel (7) ein, zwei oder drei Gürtellagen (7a; 7a1, 7a2) aufweist, wobei der Gürtel (7) mindestens einen Gürtel-Festigkeitsträger (7b) aufweist.

10. Fahrzeugluftreifen (50) nach Anspruch 9,
**dadurch gekennzeichnet, dass**
in der jeweiligen Gürtellage (7a) des Gürtels (7) jeweils mindestens ein Gürtel-Festigkeitsträger (7b) aus einem metallischen Material (mM), insbesondere Stahl, verläuft, wobei der Gürtel (7) vorzugsweise ausschließlich Gürtel-Festigkeitsträger (7b) aus dem metallischen Material (mM) aufweist.

11. Fahrzeugluftreifen (50) nach einem der vorhergehenden Ansprüche, **dadurch gekennzeichnet, dass**
der mindestens eine Spulbandagen-Festigkeitsträger (8b) in einem ersten Winkel (α1) zur Umfangsrichtung (U) innerhalb der Spulbandage (8) verläuft, wobei der erste Winkel (α1) zwischen 0° und 5°, vorzugsweise zwischen 0° und 4°, besonders bevorzugt zwischen 0 und 3°, ganz besonders bevorzugt von 0 bis 2°, beträgt.

12. Fahrzeugluftreifen (50) nach einem der vorhergehenden Ansprüche, **dadurch gekennzeichnet, dass**
die Karkass-Festigkeitsträger (2b) in den mindestens zwei Karkass-Streifen (2S) der mindestens einen Karkasslage (2a) unter einem dritten Winkel (α3) zur Umfangsrichtung (U) verlaufen, wobei
- die Karkasse (2) mindestens zwei Karkasslagen (2a) aufweist, wobei jede Karkasslage (2a) in den mindestens zwei Karkass-Streifen (2S) jeweils mindestens einen Karkass-Festigkeitsträger (2b) aus einem metallischen Material (mM) aufweist, wobei der jeweilige Karkass-Festigkeitsträger (2b) unter einem dritten Winkel (α3) von zwischen 40° und 50°, vorzugsweise 45°, zur Umfangsrichtung (U) verläuft, und die Karkass-Festigkeitsträger (2b) radial übereinanderliegender Karkasslagen (2a) entgegengesetzte Steigungsrichtungen aufweisen, so dass sich in radialer Richtung (rR) übereinanderliegende Karkass-Festigkeitsträger (2b) unterschiedlicher Karkasslagen (2a) kreuzen zum Ausbilden eines Kreuzverbandes, oder
- die Karkasse (2) lediglich eine Karkasslage (2a) aufweist, wobei die Karkasslage (2a) in den mindestens zwei Karkass-Streifen (2S) mindestens einen Karkass-Festigkeitsträger (2b) aus einem metallischen Material (mM) aufweist, wobei der Karkass-Festigkeitsträger (2b) unter einem dritten Winkel (α3) von größer als 70° und kleiner gleich 90° zur Umfangsrichtung (U) verläuft.

13. Fahrzeugluftreifen (50) nach einem der vorhergehenden Ansprüche, **dadurch gekennzeichnet, dass**
zwischen zumindest einigen in axialer Richtung (aR) benachbarten Wickelungen des mindestens einen Spulbandagen-Festigkeitsträgers (8b) Lücken (L) mit jeweils einer Lückenbreite (BL) angeordnet sind, wobei die Lückenbreiten (BL) der Lücken (L) identisch sind oder sich die Lückenbreiten (BL) mit zunehmendem axialen Abstand der jeweiligen Lücke (L) zu einem Reifenzenit (Z) des Fahrzeugluftreifens (50) ändern,
wobei die Lückenbreiten (BL) beispielsweise zwischen dem 0,5-fachen und dem 2-fachen eines Spulbandagen-Festigkeitsträger-Durchmessers (D8b) der Spulbandagen-Festigkeitsträger (8b) betragen, wenn der mindestens eine bereitgestellte Spulbandagen-Festigkeitsträger (8b) einzeln aufgespult ist, oder die Lückenbreiten (BL) beispielsweise zwischen dem 0,5-fachen und dem 1,5-fachen einer Gummistreifen-Breite (BG) eines Gummistreifens (G) betragen, bevorzugt jedoch zwischen 3mm und 10mm, wenn der mindestens eine bereitgestellte Spulbandagen-Festigkeitsträger (8b) in dem Gummistreifen (G) eingebettet aufgespult ist.

14. Fahrzeugluftreifen (50) nach Anspruch 13,
**dadurch gekennzeichnet, dass**
- die Lückenbreiten (BL) bei einer Anordnung der Lücken (L) in Seitenabschnitten (8c) der Spulbandage (8) mit zunehmendem axialem Abstand der jeweiligen Lücke (L) zu dem Reifenzenit (Z) größer werden, und/oder
- die Lückenbreiten (BL) bei einer Anordnung der Lücken (L) im Bereich des Reifenzenits (Z), vorzugsweise über eine axiale Ausdehnung von zwischen 10% und 50% der Spulbandagen-Ausdehnung (A8) um den Reifenzenit (Z), mit zunehmendem axialem Abstand zu dem Reifenzenit (Z) kleiner werden.

15. Fahrzeugluftreifen (50) nach einem der vorhergehenden Ansprüche, **dadurch gekennzeichnet, dass**
in jedem Wulstbereich (4) mindestens ein Wulstkern (5) angeordnet ist und jede Karkasslage (2a) in dem jeweiligen Wulstbereich (4) um den mindestens einen Wulstkern (5) umgeschlagen ist, so dass sich ein Karkassenhochschlag (2f) bildet, wobei der Karkasshochschlag (2f) über die Seitenwand (3) verläuft, insbesondere bis radial unter den Gürtel (7), oder der Karkasshochschlag (2f) nicht in der Seitenwand (3) verläuft, insbesondere lediglich innerhalb eines Wulstbandes (4a) zum Schützen des Wulstbereiches (4) gegenüber einer Felge angeordnet ist, so dass ein radial oberes Ende (2g) des Karkassenhochschlags (2f) radial unterhalb eines radial unteren Endes (3a) der Seitenwand (3) liegt, und
wobei der Wulstkern (5) einen tropfenförmigen Querschnitt aufweist und radial oberhalb des Wulstkerns (5) zwischen dem Wulstkern (5) und der Karkasslage (2a) kein Apex (4b) angeordnet ist.
